# EUROPEAN PATENT APPLICATION

(11) **EP 2 426 775 A1**
(43) Date of publication of application: **07.03.2012**
(21) Application number: 10769676.7
(22) Date of filing: 23.04.2010
(51) Int. Cl.: H01M 10/50, H01M 2/10

(54) **ELECTRICITY STORAGE MODULE AND ELECTRICITY STORAGE DEVICE WITH SAME**

(30) Priority: 28.04.2009 JP 2009108655
(71) Applicant: Hitachi, Ltd., Chiyoda-ku Tokyo 100-8280 (JP); Hitachi Vehicle Energy, Ltd., Ibaraki 312-0061 (JP)
(72) Inventor: HARADA, Susumu, Hitachinaka-shi Ibaraki 312-0034 (JP); TSURUMI, Yoshihisa, Hitachinaka-shi Ibaraki 312-8503 (JP); MATSUMOTO, Takehiro, Hitachinaka-shi Ibaraki 312-0062 (JP); HOMMA, Hideki, Hitachinaka-shi Ibaraki 312-0062 (JP)
(74) Representative: MERH-IP Matias Erny Reichl Hoffmann
(86) International application number: PCT/JP2010/057252
(87) International publication number: WO 2010/125977

(57) **Abstract**

An electricity storage module includes a casing 110 that includes an intake port 114 through which a cooling medium is taken in, located at one end of the casing, and an outlet port 115 through which the cooling medium is let out, located at another end of the casing. A plurality of electricity storage elements 140 are arrayed from the intake port 114 toward the outlet port 115 with clearances set between the electricity storage elements, and the clearances present between the electricity storage elements 140 are altered so as to achieve a higher flow velocity for the cooling medium on the outlet port side compared to the flow velocity of the cooling medium on the intake port side.

## Description

### TECHNICAL FIELD

The present invention relates to a technology pertaining to an electricity storage module and an electricity storage device equipped with the electricity storage module, which is typically adopted in order to assure better cooling performance.

### BACKGROUND ART

The background art related to cooling of electricity storage devices includes, for instance, the technologies disclosed in patent literature 1 and patent literature 2.

Patent literature 1 discloses a technology whereby numerous battery modules disposed in parallel within a holder case are evenly cooled by installing a regulating means within the holder case so as to achieve a higher airflow velocity on a downstream side than on an upstream side for air flowing inside the holder case. Patent literature 2 discloses a technology whereby differences in temperature among the various battery module groups is minimized by setting a ratio of "a", representing the clearance between the outer circumferential surfaces of two rod-like battery modules adjacent to each other within a battery module group located closest to a cooling air introduction port, and "b", representing the clearance between the outer circumferential surfaces of a rod-like battery module in the battery module group closest to the cooling air introduction port and a rod-like battery module in a battery module group adjacent to the battery module group closest to the cooling air introduction port, to a value within a predetermined range.

### CITATION LIST

### PATENT LITERATURE

Patent literature 1: Japanese Laid Open Patent Publication No. 2006-196471
Patent literature 2: Japanese Laid Open Patent Publication No. 2003-142059

### SUMMARY OF INVENTION

### TECHNICAL PROBLEM

Today, systems that operate on electrical energy are utilized in an ever widening range of applications in a world ever more electrically driven. Thus, we are constantly reminded of the universal need for clean power from renewable sources for everyday needs and for emergencies such as natural disasters. Such a system often includes an electricity storage device capable of storing electrical energy, which is used as a power source. The electricity storage device includes a plurality of electricity storage elements, the quantity of which varies depending upon the particular system in which the electricity storage device is installed. As the plurality of electricity storage elements are charged and discharged, heat is generated. Due to this heat generation, the electrical characteristics of the electricity storage elements change, which, in turn, causes fluctuation of the voltage that can be input or output. Accordingly, the electricity storage elements are cooled with a cooling medium so as to ensure that the temperatures of the electricity storage elements do not rise beyond a predetermined value in the electricity storage device. In other words, it is critical that the plurality of electricity storage elements in the electricity storage device be cooled. Furthermore, since the effectiveness with which the plurality of electricity storage elements are cooled directly affects the performance of the electricity storage device itself, better cooling performance must be assured by, for instance, minimizing variance in the temperatures among the various electricity storage elements through measures such as those described above in reference to the background art.

Today, the collective social conscience pursues ways for slowing down the process of global climate change and saving energy with more vigor than ever. The global community working toward these goals urgently needs to further reduce the load placed on the environment and further improve system efficiency and energy efficiency. Providing electricity storage devices with higher performance is bound to be a significant contributing factor in this endeavor. An electricity storage device with improved performance cannot be achieved without first achieving an improvement in cooling performance. Accordingly, an electricity storage device assuring better cooling performance over those in the background art is eagerly awaited.

### SOLUTION TO PROBLEM

According to the present invention, there are typically provided an electricity storage module assuring better cooling performance over the related art and an electricity storage device equipped with the electricity storage module.

It is desirable that the electricity storage module and the electricity storage device equipped with the electricity storage module be provided without increasing the extent of pressure loss within the electricity storage module or making the electricity storage module larger, by adopting a simple structure that allows a cooling medium to be distributed at a uniform flow rate through each of the plurality of electricity storage elements with a high level of efficiency and thus allows the electricity storage elements to be cooled to a uniform temperature.

The present invention is typically **characterized in that** heat transfer (heat exchange) between the cooling medium and the electricity storage elements is controlled by adjusting the clearances between the individual electricity storage elements, disposed one after another along a cooling medium flow direction and thus adjusting the cooling medium flow velocity bearing in mind temperature variance that may manifest in the cooling medium in an uncontrolled state.

For instance, a plurality of electricity storage elements in an area where electricity storage elements are cooled with the cooling medium assuming a lower temperature and a higher flow velocity, among the plurality of electricity storage elements, may be disposed with large clearances set between them along the cooling medium flow direction, so as to reduce the flow velocity of the cooling medium flowing between the individual electricity storage elements and ultimately minimize the extent of heat transfer (heat exchange) between the electricity storage elements and the cooling medium. A plurality of electricity storage elements in an area where electricity storage elements are cooled with the cooling medium assuming a high temperature and a low flow velocity, on the other hand, may be disposed with small clearances between them along the cooling medium flow direction, so as to increase the flow velocity of the cooling medium flowing between the individual electricity storage elements and ultimately to significantly promote heat transfer (heat exchange) between the electricity storage elements and the cooling medium.

In the representative aspect of the present invention described above, the heat transfer (heat exchange) between the cooling medium and the electricity storage elements is controlled so as to adjust the temperature of the plurality of electricity storage elements disposed in the area cooled with the cooling medium assuming a high temperature and a low flow velocity closer to the temperature of the plurality of electricity storage elements disposed in the area cooled with the cooling medium assuming a lower temperature and a high flow velocity. As a result, the temperature difference between the electricity storage elements disposed in the two areas can be minimized in the representative aspect of the present invention.

### ADVANTAGEOUS EFFECT OF THE INVENTION

In the representative aspect of the present invention, the variance in temperatures among the plurality of electricity storage elements is reduced over the related art. This means that better cooling performance is assured for the individual electricity storage elements over the related art. Ultimately, according to the present invention, there is typically provided an electricity storage device with more advanced performance over the related art, with which variance of the charge/discharge levels among the individual electricity storage elements and variance in the service life among the individual electricity storage elements can both be reduced.

### BRIEF DESCRIPTION OF THE DRAWINGS

(FIG. 1) A block diagram showing the structure of an onboard electrical machine system equipped with the lithium ion battery device achieved in a first embodiment of the present invention
(FIG. 2) A perspective providing an overall external view of the lithium ion battery device achieved in the first embodiment of the present invention, taken from the cooling medium outlet side
(FIG. 3) A perspective of the lithium ion battery device in FIG. 2, taken from the cooling medium intake side
(FIG. 4) A perspective providing an overall external view of one battery block in a battery module constituting part of the lithium ion battery device shown in FIG. 2
(FIG. 5) An exploded perspective of the battery block in FIG. 4
(FIG. 6) A sectional view taken along VI-VI, showing the positional arrangement and the structure adopted in a battery assembly included in the battery block shown in FIG. 4
(FIG. 7) A partial sectional view of the structure assumed at one of the side plates and an area around the side plate at the battery block shown in FIG. 4
(FIG. 8) An enlarged perspective providing a partial sectional view of the structure assumed in the gas discharge mechanism installed at one end along the length of the battery block shown in FIG. 4
(FIG. 9) A plan view showing the structure assumed at the side plate shown in FIG. 7 on its side facing toward the lithium ion electricity storage elements
(FIG. 10) A circuit block diagram showing the structure of the control device constituting part of the lithium ion battery device shown in FIG. 2
(FIG. 11) A characteristics diagram providing the results of a temperature distribution analysis conducted for a battery assembly assuming the positional arrangement and the structure shown in FIG. 6
(FIG. 12) A characteristics diagram providing the results of a temperature distribution analysis conducted as a comparison example for a battery assembly assuming different positional arrangement and structure
(FIG. 13) A characteristics diagram providing the results of a temperature distribution analysis conducted as a comparison example for a battery assembly assuming different positional arrangement and structure
(FIG. 14) A sectional view showing the positional arrangement and the structure adopted in a battery assembly included in one of the battery blocks in a battery module constituting part of the lithium ion battery device achieved in a second embodiment of the present invention
(FIG. 15) A sectional view showing the positional arrangement and the structure adopted in a battery assembly included in one of the battery blocks in a battery module constituting part of the lithium ion battery device achieved in a third embodiment of the present invention
(FIG. 16) A sectional view showing the positional arrangement and the structure adopted in a battery assembly included in one of the battery blocks in a battery module constituting part of the lithium ion battery device achieved in a fourth embodiment of the present invention
(FIG. 17) A sectional view showing the positional arrangement and the structure adopted in a battery assembly included in one of the battery blocks in a battery module constituting part of the lithium ion battery device achieved in a fifth embodiment of the present invention
(FIG. 18) A sectional view showing the positional arrangement and the structure adopted in a battery assembly included in one of the battery blocks in a battery module constituting part of the lithium ion battery device achieved in s sixth embodiment of the present invention
(FIG. 19) A sectional view showing the positional arrangement and the structure adopted in a battery assembly included in one of the battery blocks in a battery module constituting part of the lithium ion battery device achieved in a seventh embodiment of the present invention
(FIG. 20) A perspective providing an overall external view of one battery block in a battery module constituting part of the lithium ion battery device achieved in an eighth embodiment of the present invention
(FIG. 21) An exploded perspective of the battery block shown in FIG. 20
(FIG. 22) A plan view of a battery module constituted by disposing, side-by-side, two battery blocks, each structured as shown in FIG. 20, taken from the cooling medium outlet side

### DESCRIPTION OF EMBODIMENTS

The following is a description of the embodiments of the present invention.

The embodiments described below are each achieved by adopting the present invention in an electricity storage device included in an onboard power supply unit of a motor vehicle and more specifically, of an electrically driven vehicle.

While the following description is provided by assuming that the present invention is adopted in a hybrid electric vehicle equipped with both an internal combustion engine and an electric motor used as vehicle drive sources, the present invention may be adopted in different types of electric vehicles such as a pure electric vehicle that exclusively uses an electric motor as its sole drive source and can be charged via a commercial power outlet or at a charging station and a plug-in hybrid electric vehicle equipped with both an engine and an electric motor used as vehicle drive sources, which can be charged through via a commercial power outlet or at a charging station.

While the following description is provided by assuming that the electricity storage device constituting part of the onboard power supply unit is a lithium ion battery device that includes lithium ion electricity storage elements used as electricity storage elements, the present invention may instead be adopted in a battery device equipped with other types of electricity storage elements, such as nickel hydrogen electricity storage elements or lead acid electricity storage elements.

The structures to be described in reference to the individual embodiments below may each be adopted in an electricity storage device in a vehicle power supply unit for different types of motor vehicles, including a railway vehicle such as a hybrid train, a public transportation vehicle such as a bus, a freight vehicle such as a truck and an industrial vehicle such as a battery-operated forklift truck.

In addition, the structures to be described in reference to the individual embodiments below may each be adopted in an electricity storage device constituting a power supply unit for equipment other than motor vehicles, such as an uninterruptible power supply unit in a computer system or a server system, a power supply unit in an on-site power generation facility or a power supply unit in a power generation facility where power is generated by using natural energy such as solar energy, wind energy or geothermal energy.

One of the crucial factors that determine the performance level of an electricity storage device constituting part of a power source unit is an increase in the temperature of the electricity storage elements. Accordingly, the electricity storage elements in the electricity storage device are cooled with a cooling medium, e.g., air from inside or outside the cabin, drawn into the electricity storage module. It is crucial that this cooling operation be executed so that the electricity storage elements are cooled to a uniform temperature. In order to achieve uniform cooling of the electricity storage elements with the cooling medium distributed to the plurality of electricity storage elements at a uniform flow rate with a high level of efficiency, the pressure balance within the electricity storage module must be adjusted and the extent of pressure loss in the electricity storage module must be reduced by disposing the electricity storage elements in a specific positional arrangement so as to adjust the clearances forming a plurality of flow passages in the electricity storage module, including an electricity storage element-to-electricity storage flow passage formed between electricity storage elements, an intake flow passage through which the cooling medium is guided from a cooling medium intake port to the electricity storage element-to-electricity storage element flow passage, an outlet flow passage through which the cooling medium having been guided to the areas between the electricity storage elements is guided toward a cooling medium outlet port and end flow passages formed on the two sides at the ends of the array of the plurality of electricity storage elements, set opposite each other along the cooling medium flow direction.

However, the plurality of electricity storage elements in a battery device, such as an onboard battery device, subjected to restrictions pertaining to the installation space, need to be mounted at high density, which is bound to result in a narrower clearance in the electricity storage element-to-electricity storage element flow passage compared to the clearances formed in the other flow passages. For this reason, the extent of pressure loss occurring in the electricity storage element-to-electricity storage element flow passage is bound to be greater than the extents of pressure loss occurring in the other flow passages in the battery device subjected to installation space restrictions.

In addition, the cooling medium drawn through the intake flow passage toward the electricity storage element-to-electricity storage element flow passage may flow in an eddy current depending upon the shape of the electricity storage elements, the contour of the flow passage or the like. Under such circumstances, the extent of pressure loss occurring in the electricity storage element-to-electricity storage element flow passage may become greater than the extents of pressure loss occurring in the other flow passages due to such an eddy current.

Furthermore, while electricity storage elements are cooled quickly and thoroughly with a cooling medium at low-temperature, electricity storage element cooling is slowed if the temperature of the cooling medium is high. Thus, while the electricity storage elements disposed on the upstream side where the temperature of the cooling medium remains low are cooled quickly and effectively, electricity storage element cooling slows down on the downstream side where the temperature of the cooling medium, having been used to cool the electricity storage elements on the upstream side, will have become higher. Consequently, the electricity storage elements arrayed on the cooling medium upstream side and the electricity storage elements arrayed on the cooling medium downstream side are not cooled evenly.

In addition, while electricity storage elements are cooled quickly with the cooling medium flowing at high flow velocity, electricity storage element cooling is slowed if the flow velocity is lower. Thus, the electricity storage elements arrayed over an area where the cooling medium flow velocity is high and the electricity storage elements arrayed in an area where the cooling medium flow velocity is low are not cooled evenly.

The problems discussed above must be addressed properly in order to assure improved electricity storage device performance by distributing the cooling medium to the individual electricity storage elements at a uniform flow rate with high efficiency and thus cooling the plurality of electricity storage elements to a uniform temperature.

In order to meet the challenges discussed above, i.e., in order to minimize unevenness in the extent to which the electricity storage elements are cooled with the cooling medium through a simple structure that allows the pressure loss within the electricity storage module to be minimized and the cooling medium flow velocity to be optimized without having to add any new elements, such as a means for adjusting the pressure or the flow velocity of the cooling medium, into the electricity storage module or making the electricity storage module larger, the heat transfer (heat exchange) between the cooling medium and the electricity storage elements needs to be controlled by adjusting the clearances between the electricity storage elements and thus adjusting the flow velocity of the cooling medium while fully taking into consideration the variance in the temperature of the cooling medium. In other words, heat transfer (heat exchange) between the cooling medium and the electricity storage elements must be impeded or promoted by disposing electricity storage elements over greater clearances or lesser clearances along the cooling medium flow direction.

In the embodiments, a plurality of electricity storage elements located in an area cooled with a cooling medium assuming a low-temperature and a high flow velocity, among the plurality of electricity charge elements, are disposed over greater clearances along the cooling medium flow direction, so as to lower the flow velocity of the cooling medium flowing through the clearances between the individual electricity storage elements, whereas a plurality of electricity storage elements located in an area cooled with the cooling medium assuming a high temperature and a low flow velocity are disposed over lesser clearances along the cooling medium flow direction, so as to raise the flow velocity of the cooling medium flowing through the clearances between the electricity storage elements.

Through the measures taken in the embodiments described above, the heat transfer (heat exchange) between the electricity storage elements disposed in the area cooled with the cooling medium assuming a low-temperature and a higher flow velocity is impeded but the heat transfer (heat exchange) between the electricity storage elements disposed in the area cooled with the cooling medium assuming a high temperature and a low flow velocity is actively promoted so as to adjust the temperature of the electricity storage elements disposed in the area cooled with high temperature / low flow velocity closer to the temperature of the electricity storage elements disposed in the area cooled with the low-temperature / high flow velocity cooling medium and thus reduce the difference between the temperatures at the electricity storage elements disposed in the two different areas.

As a result, the challenges discussed above are met, the temperature variance among the electricity storage elements is reduced over the related art and better electricity storage element cooling performance, over that of the related art, is assured through the embodiments. In other words, through the embodiments in which the cooling medium is distributed to each of the plurality of electricity storage elements at a uniform flow rate with a high level of efficiency, the electricity storage elements can be cooled to a uniform temperature. Consequently, an electricity storage device with more advanced performance over that in the related art can be provided through any of the embodiments in which the variance in the charge/discharge levels at the individual electricity storage elements and the variance in the service life of the individual electricity storage elements are reduced.

The following is a detailed description of the embodiments of the present invention, given in specific terms in reference to the drawings.

### Embodiment 1

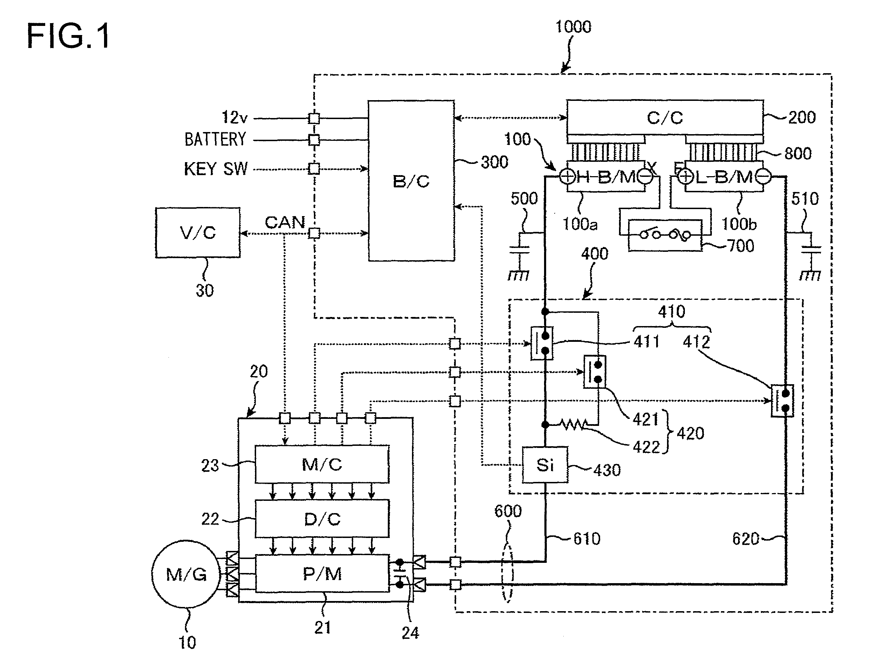

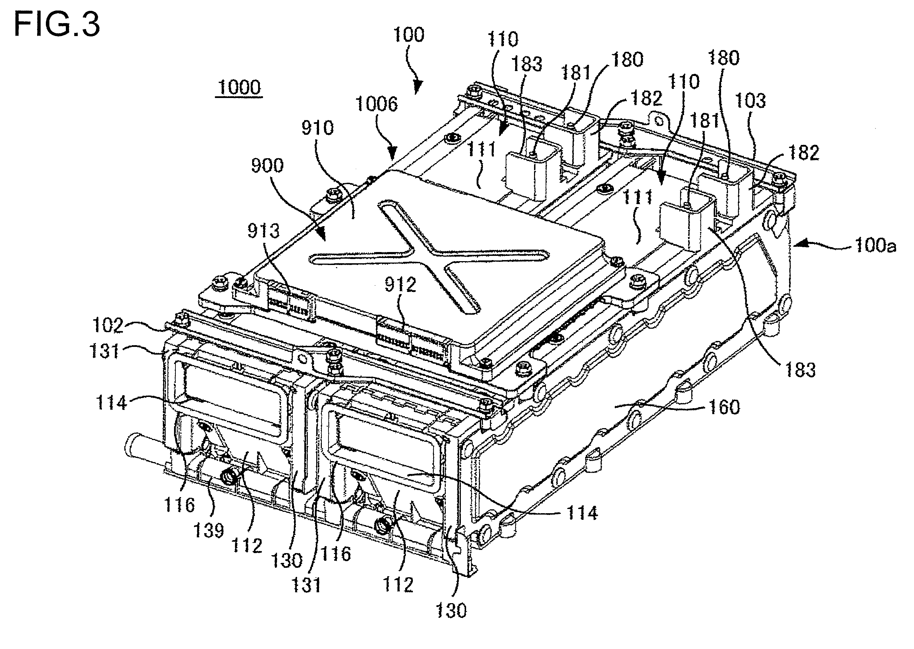

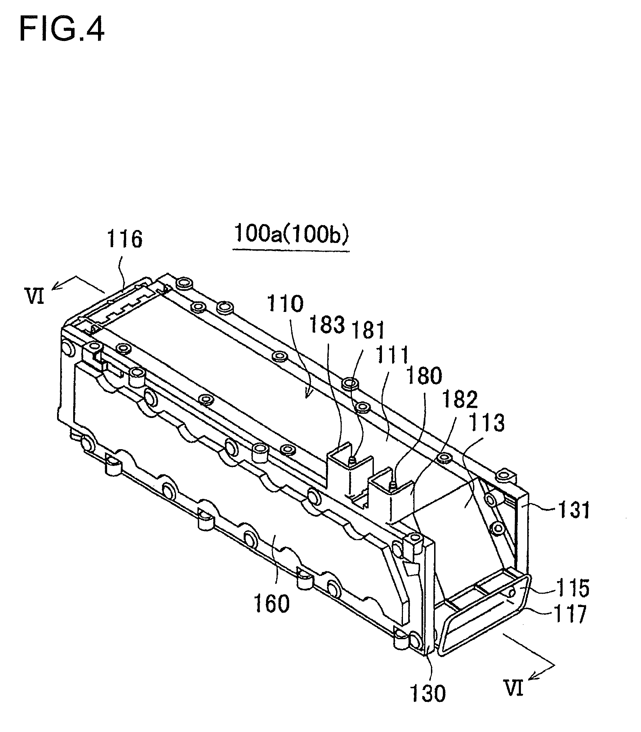

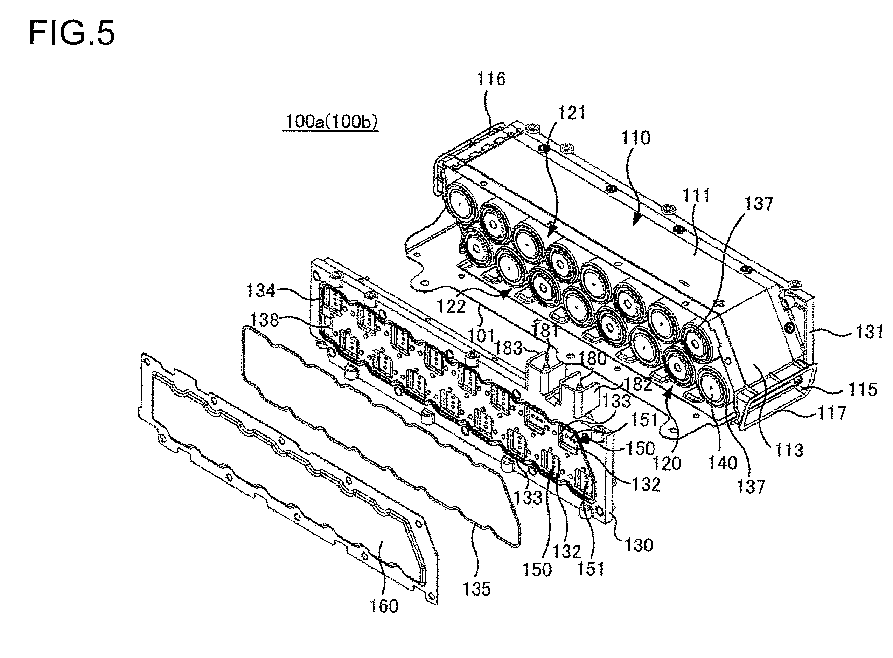

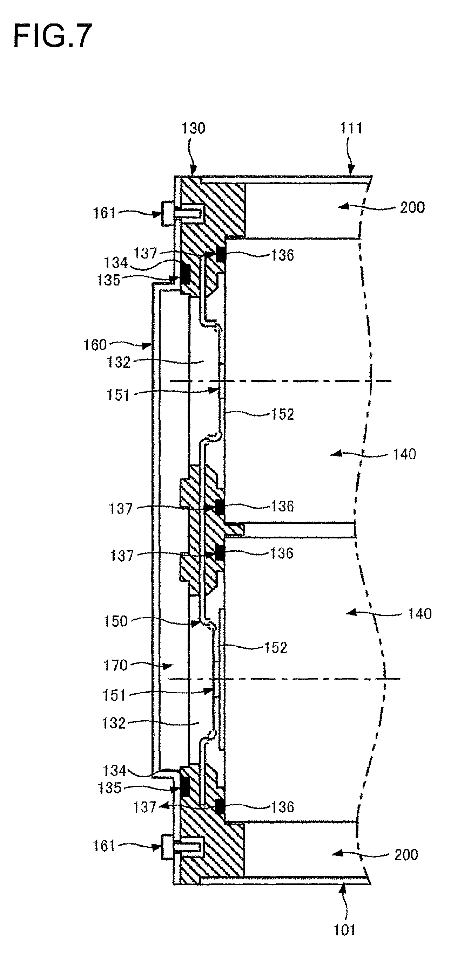

The first embodiment of the present invention is now described in reference to FIGS. 1 through 13.

First, the configuration of an onboard electrical machine system (electric motor drive system) is described in reference to FIG. 1.

The onboard electrical machine system in the embodiment drives a motor generator 10, which is a three-phase AC synchronous unit to engage it in motor operation and provides the rotational motive power generated at the motor generator as a result to a drive target, such as wheels or an engine, in an operating mode that requires rotational motive power, e.g., when the vehicle is engaged in power running or an internal combustion engine in the vehicle is started up. Accordingly, DC power originating from a lithium ion battery device 1000 used as an electricity storage device constituting part of an onboard power supply unit in the onboard electrical machine system in the embodiment, is converted to three-phase AC power via an inverter device 20 functioning as a power conversion device and the three-phase AC power is then supplied to the motor generator 10.

In addition, the onboard electrical machine system in the embodiment, in an operating mode requiring power generation, e.g., during a regenerative operation with the vehicle is coasting or being braked, or when the lithium ion battery device 1000 needs to be charged or the like, the onboard electrical machine system in the embodiment drives the motor generator 10, engaged in operation as a generator, with a drive force originating from the wheels or the engine and thus generates three-phase AC power. In this situation, the three-phase AC power generated at the motor generator 10 is converted to DC power by the inverter device 20 and the DC power is then supplied to the lithium ion battery device 1000 in the onboard electrical machine system in the embodiment. Electrical power is thus accumulated at the lithium ion battery device 1000.

The motor generator 10, which is an electric machine that operates on electromagnetic energy occurring between an armature (e.g., a stator) and a magnetic field member (e.g., a rotor) which is disposed so as to face opposite the armature and is rotatably supported. A rotary shaft of the magnetic field member is mechanically connected to a rotary shaft of a drive target such as the wheels or the engine and thus, rotational motive power can be exchanged between the magnetic field member and the drive target.

The armature, provided with three-phase AC power, generates a rotating magnetic field member when the motor generator 10 is driven as a motor, whereas it generates three-phase AC power through magnetic flux interlinkage when the motor generator 10 is driven as a generator. It includes a magnetic armature core (stator core) and three-phase armature windings (stator windings) mounted at the armature core.

The field member, which generates a magnetic field member flux when the motor generator 10 is driven as a motor or a generator, includes a magnetic field member core (rotor core) and permanent magnets mounted at the field core or a field winding (rotor winding). As an alternative, the field member may include both the permanent magnets and the field winding. As the field winding is magnetized with a field current provided from an external source, a magnetic flux is generated.

The inverter device 20 is an electronic circuit device that controls the power conversion described earlier (the conversion from DC power to three-phase AC power and the conversion from three-phase AC power to DC power) by engaging semiconductor switching elements in operation (by turning on/off the semiconductor switching elements) and comprises a power module 21, a driver circuit 22, a motor controller 23 and a smoothing capacitor 24.

The power module 21, which includes six semiconductor switching elements, is a power conversion circuit that executes the power conversion described earlier by switching (turning on/off) the six semiconductor switching elements. The semiconductor switching elements may be either metal oxide film semiconductor field effect transistors (MOSFETs) or insulated gate-type bipolar transistors (IGBTs). While the semiconductor switching elements constituted with MOSFETs each include a parasitic diode connected between the drain electrode and the source electrode in an electrically anti-parallel configuration, a separate diode must be connected between the collector electrode and the emitter electrode in an electrically anti-parallel configuration in a semiconductor switching element constituted with an IGBT. The power conversion circuit is configured as a three-phase bridge circuit that includes serial circuits corresponding to three phases, which are electrically connected in parallel, with each serial circuit equipped with two semiconductor switching elements (an upper arm and a lower arm corresponding to a given phase) electrically connected in series.

The end of each upper arm, located on the side opposite from the side that connects with the corresponding lower arm, is electrically connected to a DC positive pole-side module terminal, whereas the end of each lower arm, located on the side opposite from the side connected with the corresponding upper arm, is electrically connected with a DC negative pole-side module terminal. The middle point in each set of upper and lower arms, i.e., the side on which the upper arm and the lower arm are connected, is electrically connected to an AC-side module terminal. The DC positive pole-side module terminal and the DC negative pole-side module terminal are electrically connected respectively with a DC positive pole -side external terminal and a DC negative pole-side external terminal. The DC positive pole-side external terminal and the DC negative pole-side external terminal are power source-side terminals via which DC power is exchanged with the lithium ion battery device 1000, and power cables 600 extending from the lithium ion battery device 1000 are electrically connected to the power source-side terminals. The AC-side module terminal is electrically connected with an AC-side external terminal. The AC-side external terminal is a load-side terminal via which three-phase AC power is exchanged with the motor generator 10, and a load cable extending from the motor generator 10 is electrically connected to the load-side terminal.

In order to regulate high-speed switching operation of the semiconductor switching elements constituting the power conversion circuit and suppress fluctuations of the voltage attributable to the parasitic inductance in the power conversion circuit, the smoothing capacitor 24 is connected between the DC positive pole-side and the DC negative pole-side of the power conversion circuit in an electrically parallel configuration. The smoothing capacitor 24 may be an electrolytic capacitor or a film capacitor.

The motor controller 23, which is an electronic circuit device engaged in control of the switching operation of the six semiconductor switching elements constituting the power conversion circuit, generates switching operation command signals (e.g., PWM (pulse width modulation) signals) for the six semiconductor switching elements based upon a torque command output from a higher-order controller, e.g., a vehicle controller 30 that controls the entire vehicle. The command signals thus generated are output to the driver circuit 22.

Based upon the switching operation command signals output thereto from the motor controller 23, the driver circuit 22 generates drive signals for the six semiconductor switching elements constituting the power conversion circuit. The drive signals generated by the driver circuit are output to the gate electrodes of the six semiconductor switching elements constituting the power conversion circuit. As a result, the six semiconductor switching elements constituting the power conversion circuit are switched (turned on/off) under control executed based upon the drive signals output from the driver circuit 22.

The lithium ion battery device 1000 includes a battery module 100 that accumulates and releases electrical energy (charges and discharges DC power) and a controller that manages and controls the condition of the battery module 100.

The battery module 100 is constituted with two battery blocks (battery assemblies), i.e., a high potential-side battery block 100a and a low potential-side battery block 100b that are electrically connected in series. A battery assembly is housed in each battery block. The battery assemblies are each constituted with a plurality of lithium ion electricity storage elements electrically connected in series.

An SD (service disconnect) switch 700 is installed between the negative pole-side (low potential side) of the high potential-side battery block 100a and the positive pole-side (high potential side) of the low potential-side battery block 100b. The SD switch 700 is a safety device installed so as to assure safety when performing maintenance and inspection of the lithium ion battery device 1000. It is constituted with an electrical circuit with a switch and a fuse electrically connected in series and is operated when a service person performs maintenance and inspection.

The controller is constituted with a battery controller 300 designated as a higher-order (master) unit and a cell controller 200 designated as a lower-order (slave) unit.

The battery controller 300 manages and controls the condition of the lithium ion battery device 1000 and also provides charge/discharge control commands indicating, for instance, the state of charge and the allowable charge/discharge levels at the lithium ion battery device 1000 to a higher-order controller. The condition of the lithium ion battery device 1000 is managed and controlled by measuring the voltage and the current at the lithium ion battery device 1000, determining through arithmetic operation the state of charge (SOC) and the state of health (SOH) at the lithium ion battery device 1000, measuring the temperatures of the individual battery blocks and outputting commands for the cell controller 200 (e.g., a command for measuring the voltage at each lithium ion electricity storage element and a command for adjusting the quantity of power stored in each lithium ion electricity storage element). The higher-order controller in this case may be the vehicle controller 30 or the motor controller 23.

The cell controller 200, constituted with a plurality of integrated circuits (ICs), functions as the arms of the battery controller 300 as it manages and controls the conditions of the plurality of lithium ion electricity storage elements based upon commands provided from the battery controller 300. The conditions in the plurality of lithium ion electricity storage elements are managed and controlled by measuring the voltages at the individual lithium ion electricity storage elements, adjusting the levels of power stored in the individual lithium ion electricity storage elements and the like. A plurality of lithium ion electricity storage elements is assigned to each integrated circuit, which controls and manages the conditions of the corresponding lithium ion electricity storage elements.

An auxiliary battery (a lead battery with a nominal output voltage of 12 V in the case of an automobile) installed as the power source for onboard accessories such as lamps and an audio system, is used as the power source for the battery controller 300. Thus, the voltage (e.g., 12 V) from the auxiliary battery is applied to the battery controller 300. The voltage applied to the battery controller 300 is lowered (to, for instance, 5V), via a power supply circuit constituted with a DC-DC converter (DC-DC power converter) and the voltage thus lowered is applied as a drive voltage to electronic components constituting the battery controller 300. The electronic components constituting the battery controller 300 are thus engaged in operation with the drive voltage applied thereto.

The plurality of lithium ion electricity storage elements is used as the power source for the corresponding integrated circuit in the cell controller 200. For this reason, the cell controller 200 and the battery module 100 are electrically connected via connection lines 800. The voltage corresponding to the maximum potential among the potentials at the plurality of corresponding lithium ion electricity storage elements is applied to each integrated circuit via the connection lines 800. The voltage applied to the integrated circuit is lowered (to, for instance, 5V) via a power supply circuit and the lowered voltage is then used as the operating power in the integrated circuit.

A signal output from an ignition key switch is input to the battery controller 300. The signal output from the ignition key switch is used as a signal indicating that the lithium ion battery device 1000 is to be started up or stopped.

As the ignition key switch enters an ON state, the power supply circuit in the battery controller 300 is engaged in operation based upon the signal output from the ignition key switch and the plurality of electronic circuit components operate on the drive voltage applied from the power supply circuit. As a result, the battery controller 300 is started up. Once the battery controller 300 is started up, a startup command is output from the battery controller 300 to the cell controller 200. At the cell controller 200, the power supply circuits in the plurality of integrated circuits are engaged in operation in sequence based upon the startup command from the battery controller 300, thereby sequentially starting up the plurality of integrated circuits. As a result, the cell controller 200 is started. As the cell controller 200 is started up, specific initialization processing is executed and thus, the lithium ion battery device 1000 starts up.

As the specific initialization processing, the voltages at the individual lithium ion electricity storage elements may be measured, error diagnosis may be executed, the voltage and the current at the lithium ion battery device 1000 may be measured, the temperatures of the individual battery blocks may be measured, the state of charge and the state of health of the lithium ion battery device 1000 may be determined through arithmetic operation and the allowable charge/discharge levels may be determined for the lithium ion battery device 1000 through arithmetic operation.

As the ignition key switch enters an OFF state, a stop command is output from the battery controller 300 to the cell controller 200. Upon receiving the stop command, the cell controller 200 executes specific end processing, following which the power supply circuits in the plurality of integrated circuits stop in sequence and thus the plurality of integrated circuits are turned off in sequence, thereby turning off the cell controller 200. Once the cell controller 200 stops and communication with the cell controller 200 is disabled, the operation of the power supply circuit at the battery controller 300 stops, thereby stopping the operation of the plurality of electronic circuit components. Consequently, the battery controller 300 is turned off and the lithium ion battery device 1000, too, is turned off.

The specific end processing may be executed by measuring the voltages at the individual lithium ion electricity storage elements and adjusting the levels of power stored in the individual lithium ion electricity storage elements.

Information is exchanged between the battery controller 300 and the higher-order control device such as the vehicle controller 30 or the motor controller 23 through CAN (controller area network) communication. Information is exchanged between the battery controller 300 and the cell controller 200 through LIN (local interconnect network) communication conducted in compliance with the CAN network communication.

A positive pole terminal of the high potential-side battery block 100a and the DC positive pole-side external terminal of the inverter device 20 are electrically connected via a positive pole-side power cable 610. A negative-pole terminal of the low potential-side battery block 100b and the DC negative pole-side external terminal of the inverter device 20 are electrically connected via a negative pole-side power cable 620.

A junction box 400 is disposed on the power cables 600. A relay mechanism constituted with a main relay 410 and a pre-charge circuit 420 is housed inside the junction box 400. The relay mechanism is a switching unit that sets the battery module 100 and the inverter device 20 in an electrically continuous state or an electrically isolated state. When starting up the onboard electrical system, the battery module 100 and the inverter device 20 are set in the electrically continuous state, whereas when the onboard electrical system is turned off or in the event of an error, the battery module 100 and the inverter device 20 are set in the electrically isolated state. By controlling the electrical connection between the lithium ion battery device 1000 and the inverter device 20 via the relay mechanism as described above, a high level of safety is assured for the onboard electrical system.

Drive of the relay mechanism is controlled by the motor controller 23. Upon receiving a startup complete notice indicating that the lithium ion battery device 1000 has been fully started up from the battery controller 300 as the onboard electrical system is started up, the motor controller 23 outputs a continuity command signal to the relay mechanism, thereby driving the relay mechanism. In addition, when the onboard electrical system is turned off or when a fault has occurred in the onboard electrical system, the motor controller 23 outputs a cutoff command signal to the relay mechanism based upon an OFF signal output from the ignition key switch or a fault signal received from the vehicle controller 30 so as to drive the relay mechanism.

The main relay 410 is constituted with a positive pole-side main relay 411 and a negative pole-side main relay 412. The positive pole-side main relay 411, disposed on the positive pole-side power cable 610, controls the electrical connection between the positive pole-side of the lithium ion battery device 1000 and the positive pole-side of the inverter device 20. The negative pole-side main relay 412, disposed on the negative pole-side power cable 620, controls the electrical connection between the negative pole-side of the lithium ion battery device 1000 and the negative pole-side of the inverter device 20.

The pre-charge circuit 420 is a serial circuit formed by electrically connecting a pre-charge relay 421 and a resistor 422 in series, and is electrically connected to the positive pole-side main relay 411 in parallel.

The onboard electrical system is started up first by turning on the negative pole-side main relay 412 and then turning on the pre-charge relay 421. As a result, the electric current supplied from the lithium ion battery device 1000 is first limited via the resistor 422 and the current thus limited is then supplied to the smoothing capacitor 24 to charge the smoothing capacitor. After the smoothing capacitor 24 is charged to achieve a predetermined voltage, the positive pole-side main relay 411 is turned on and the pre-charge relay 421 is opened. Thus, the main current is supplied from the lithium ion battery device 1000 to the inverter device 20 via the positive pole-side main relay 411. The main current supplied at this time is equal to or less than the allowable current at the positive pole-side main relay 411 and the smoothing capacitor 24. This means that the smoothing capacitor 24 and the positive pole-side main relay 411 are protected from excessive current by ensuring that a momentary inflow of a large initial current from the lithium ion battery device 1000 to the inverter device 20, caused by the absence of any substantial electrical charge in the smoothing capacitor 24 at the time of onboard electrical system startup, does not heat the smoothing capacitor 24 to cause damage or fuse the fixed contact point and the movable contact point at the positive pole-side main relay 411.

In addition, a current sensor 430 is housed inside the junction box 400. The current sensor 430 is installed so as to detect the current supplied from the lithium ion battery device 1000 to the inverter device 20. The output line of the current sensor 430 is electrically connected to the battery controller 300. Based upon a signal output from the current sensor 430, the battery controller 300 is able to detect the current supplied from the lithium ion battery device 1000 to the inverter device 20. Current detection information indicating the detected current is provided from the battery controller 300 to the motor controller 23, the vehicle controller 30 and the like. In an alternative configuration, the current sensor 430 may be installed outside the junction box 400. The current originating from the lithium ion battery device 1000 may be detected on the side of the positive pole-side main relay 411 further toward the battery module 100 instead of on the side of the positive pole-side main relay 411 further toward the inverter device 20.

It is to be noted that a voltage sensor that detects the voltage at the lithium ion battery device 1000 may be housed inside the junction box 400. The output line of such a voltage sensor is electrically connected to the battery controller 300, as is the output line of the current sensor 430. Based upon a signal output from the voltage sensor, the battery controller 300 is able to detect the voltage at the lithium ion battery device 1000. Voltage detection information indicating the detected voltage is provided to the motor controller 23 and the vehicle controller 30. The voltage at the lithium ion battery device 1000 may be detected either on the side of the relay mechanism further toward the battery module 100 or on the side of the relay mechanism further toward the inverter device 20.

A positive pole-side capacitor 500 is electrically connected at a position between the positive pole-side power cable 610 and a casing ground (with a potential equal to that at the vehicle chassis) of the lithium ion battery device 1000. A negative pole-side capacitor 510 is electrically connected at a position between the negative pole-side power cable 620 and the casing ground (with a potential equal to that at the vehicle chassis) of the lithium ion battery device 1000. The positive pole-side capacitor 500 and the negative pole-side capacitor 510 are installed in order to prevent erroneous operation of the battery controller 300 and the cell controller 200, each forming a low-power electrical system circuit, and prevent damage from a surge voltage in the integrated circuits (ICs) constituting the cell controller 200 by removing noise occurring at the inverter device 20. While the inverter device 20 itself includes a noise removal filter, the presence of the additional capacitors, i.e., the positive pole-side capacitor 500 and the negative pole-side capacitor 510, which help prevent erroneous operation of the battery controller 300 and the cell controller 200, each forming a low-power electrical system circuit, and prevent damage from a surge voltage in the integrated circuits (ICs) constituting the cell controller 200 more effectively, assures a higher level of reliability with regard to the noise withstanding performance of the lithium ion battery device 1000.

It is to be noted that the onboard electrical system in the embodiment uses the air inside the vehicle as the cooling medium and the lithium ion battery device 1000 and the inverter device 20 are sequentially cooled with the air in this order. For this reason, the lithium ion battery device 1000 and the inverter device 20 are housed inside a common storage case and their cooling passages are connected with each other through a duct. In addition, the drive of a fan used to feed the cooling medium into the storage case is controlled by the motor controller 23 or the vehicle controller 30 functioning as the higher-order controller relative to the motor controller 23 by monitoring the temperatures at the battery module 100 and the power module 21. If the lithium ion battery device 1000 is installed separately, the drive of the fan that feeds the cooling medium will be controlled by the battery controller 300 by monitoring the temperature at the battery module 100.

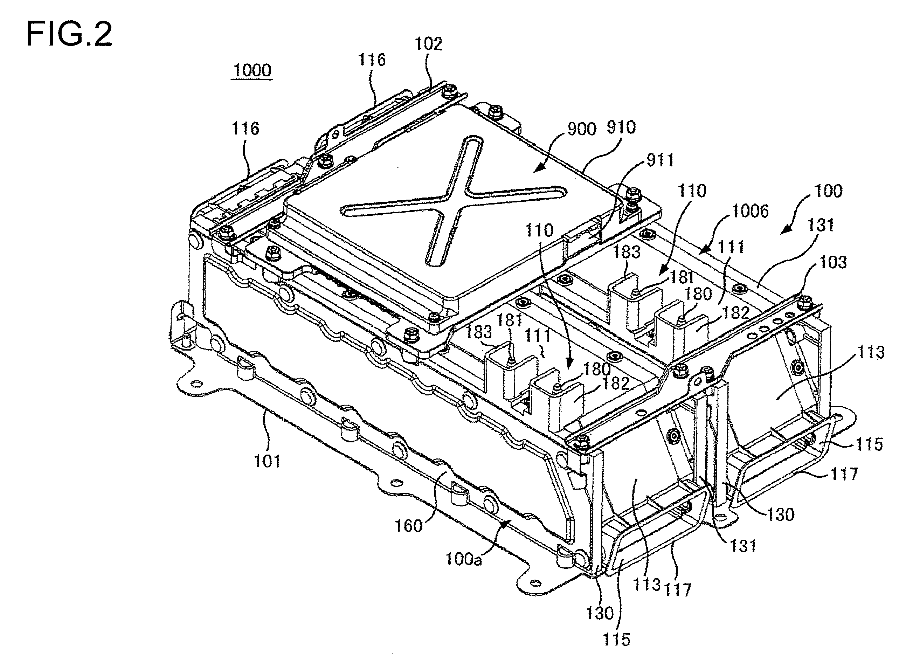

In reference to FIGS. 2 through 10, the structure adopted in the lithium ion battery device 1000 is described.

The lithium ion battery device 1000 is constituted with two primary units, i.e., the battery module 100 and a control device 900.

The structure of the battery module 100 is first described.

As explained earlier, the battery module 100 in the embodiment is made up with the high potential-side battery block 100a and the low potential-side battery block 100b, which are electrically connected with each other in series. The high potential-side battery block 100a and the low potential-side battery block 100b are substantially hexahedral blocks structured identically to each other, each having two side surfaces thereof facing opposite each other along the lengthwise direction, e.g., along the longer side of the rectangular parallelepiped shape, inclining parallel to each other. They are disposed side by side on a common module base 101, adjacent to each other along the crosswise direction, e.g., along their shorter sides, and are fixed onto the module base via locking means such as bolts. The module base 101 is a rectangular flat plate with the measurement thereof taken along the crosswise direction greater than (at least twice as long as) the measurement of the battery blocks taken along the crosswise direction. The module base 101 is constituted with a rigid metal plate (e.g., an iron plate) having a small wall thickness and is fixed onto the body of the vehicle.

A support member 102 locks the high potential-side battery block 100a and the low potential-side battery block 100b at their ends located on one side along the lengthwise direction. A support member 103 locks the high potential-side battery block 100a and the low potential-side battery block 100b at their ends located on the other side along the lengthwise direction. The support members 102 and 103 are plate members constituted of a very rigid metal.

The primary components of the high potential-side battery block 100a are a casing 110 (may be referred to as a housing or a package) and a battery assembly 120. The battery assembly 120 is housed and held inside the casing 110.

The casing 110 is a substantially hexahedral block casing with the two side surfaces thereof facing opposite each other along the longer side of the rectangular parallelepiped shape inclining parallel to each other. It is structured as a combination of six members, i.e., an intake flow passage forming plate 111, an outlet flow passage forming plate constituted with the module base 101, an intake-side guide plate 112, an outlet-side guide plate 113 and two side plates 130 and 131. The internal space at the casing 110 forms a storage chamber where the battery assembly 120 is housed and also functions as a cooling passage to be detailed later, through which the cooling medium (cooling air) used to cool the battery assembly 120 flows.

It is to be noted that while the module base 101 also functions as the outlet flow passage forming plate in the embodiment, the casing may include a separate outlet flow passage forming plate independent of the module base 101.

The intake flow passage forming plate 111 is a rectangular flat plate constituting the upper surface of the casing 110. The outlet flow passage forming plate (module base 101) is a flat plate constituting the bottom surface of the casing 110. The intake flow passage forming plate 111 and the outlet flow passage forming plate (module base 101) are disposed at positions offset relative to each other along the lengthwise direction. Thus, the positions of the ends of the intake flow passage forming plate 111 and the outlet flow passage forming plate (module base 101) along their longer sides are offset along the lengthwise direction. The intake flow passage forming plate 111 and the outlet flow passage forming plate (module base 101) are each constituted with a rigid metal plate having a small wall thickness.

It is to be noted that an outlet flow passage forming plate provided as a member independent of the module base 101 should be constituted with a rectangular flat plate assuming a size matching that of the intake flow passage forming plate 111.

The intake-side guide plate 112 is a plate member constituting one of the side surfaces of the casing 110 facing opposite each other along the lengthwise direction. The outlet-side guide plate 113 is a plate member constituting the other side surface facing opposite the first side surface along the lengthwise direction at the casing 110. The intake-side guide plate 112 and the outlet-side guide plate 113 are each constituted with a rigid metal plate having a small wall thickness.

As explained earlier, the positions of the ends of the intake flow passage forming plate 111 and the outlet flow passage forming plate (module base 101) along their longer sides are offset relative to each other along the lengthwise direction. Thus, the intake-side guide plate 112 is constituted with a tilted flat plate ranging at an angle from the end of the outlet flow passage forming plate located on one side along the lengthwise direction toward the end of the intake flow passage forming plate 111 located on the same side along the lengthwise direction. The outlet-side guide plate 113 is constituted with a tilted flat plate ranging at an angle from the end of the intake flow passage forming plate 111 located on the other side along the lengthwise direction toward the end of the outlet flow passage forming plate located on the same side along the lengthwise direction.

The side plates 130 and 131 are flat plate members constituting the two side surfaces of the casing 110 facing opposite each other along the crosswise direction. The flat plate members are moldings, each formed by casting a resin assuring reliable electrical insulation, such as PTB. The side plates 130 and 131 assume a wall thickness greater than those of the intake flow passage forming plate 111, the outlet flow passage forming plate (module base 101), the intake-side guide plate 112 and the outlet-side guide plate 113.

A cooling medium intake port 114, through which the cooling air used as the cooling medium is taken into the casing 110, is formed between the end of the intake flow passage forming plate 111 located on one side along the lengthwise direction and the end of the intake-side guide plate 112 located toward the intake flow passage forming plate 111. A cooling medium intake duct 116 through which the cooling air is guided to the cooling medium intake port 114 is disposed at the cooling medium intake port 114. A cooling medium outlet port 115, through which the cooling air in the casing 110 is let out, is formed between the end of the outlet flow passage forming plate (module base 101) located on the other side along the lengthwise direction and the end of the outlet-side guide plate 113 located toward the outlet flow passage forming plate (module base 101). A cooling medium outlet duct 117 through which the cooling air is guided from the cooling medium outlet port 115 to the outside is disposed at the cooling medium outlet port 115.

The positions of the cooling medium intake port 114 and the cooling medium outlet port 115 are offset relative to each other along the height-wise direction (the direction along which the intake flow passage forming plate 111 and the outlet flow passage forming plate (module base 101 face opposite each other). Namely, the cooling medium intake port 114 is located further toward the intake flow passage forming plate 111, whereas the cooling medium outlet port 115 is located further toward the outlet flow passage forming plate (module base 101). They are thus located so as to allow the battery assembly 120 to assume a specific positional arrangement and to allow the cooling air to be distributed through specific flow paths to cool the battery assembly 120, as described later.

The intake flow passage forming plate 111, the intake-side guide plate 112, the outlet-side guide plate 113, the cooling medium intake port 114, the cooling medium outlet port 115, the cooling medium intake duct 116 and the cooling medium outlet duct 117 are formed as an integrated unit. While these numbers may be formed as members separate from one another, it is more desirable to form them as an integrated unit, in order to assure easier assembly of the battery block. If the outlet flow passage forming plate is provided as a member independent of the module base 101, it is desirable to form the intake flow passage forming plate 111, the outlet-side guide plate 113, the cooling medium intake port 114 and the cooling medium intake duct 116 as an integrated unit and form the outlet flow passage forming plate, the intake-side guide plate 112, the cooling medium outlet port 1156 and the cooling medium outlet duct 117 as an integrated unit in order to assure easier assembly of the battery block.

The intake flow passage forming plate 111, the outlet flow passage forming plate (module base 101), the intake-side guide plate 112, the outlet-side guide plate 113, the cooling medium intake port 114 and the cooling medium outlet port 1156 and the side plates 130 and 131 are combined together via locking means such as screws, bolts or rivets. A seal member (not shown) is disposed over each area where a given member is made to join another member, so as to assure a high level of airtightness inside the casing 110 and allow the cooling medium having been drawn into the casing 110 via the cooling medium intake port 114 to be let out through the cooling medium outlet port 1156 without leakage.

The terms "lengthwise direction" and "crosswise direction", having already been used in an earlier description, are defined respectively as the direction along which the casing 110 assumes the greatest length or the direction ranging from the cooling medium intake port 114 toward the cooling medium outlet port 115 and as the direction along which the two side surfaces (the two side plates 130 and 131), other than the two side surfaces (the intake-side guide plate 112 and the outlet-side guide plate 113) of the casing 110 facing opposite each other along the lengthwise direction, face opposite each other, the direction along which the central axes of the lithium ion electricity storage elements 140 extend (the direction along which the two electrodes, i.e., the positive pole terminal and the negative-pole terminal, face opposite each other) or the direction along which a conductive member electrically connecting two lithium ion electricity storage elements 140 and the two lithium ion electricity storage elements 140 face opposite each other. The terms defined as described above are to be used in the subsequent description as well.

In addition, the term "height-wise direction" is defined in reference to the embodiment as the direction along which the intake flow passage forming plate 111 and the outlet flow passage forming plate (module base 101) face opposite each other or the direction along which the outlet flow passage forming plate (module base 101), an outlet-side cooling passage, the battery assembly 120, the intake-side cooling passage and the intake flow passage forming plate are layered one on top of another, irrespective of the direction along which the battery module 100 is installed. The term thus defined is used in the subsequent description as well.

The battery assembly 120 is structured as an aggregation (group) of a plurality of lithium ion electricity storage elements 140. The lithium ion electricity storage elements 140 are housed in an array inside the storage chamber formed within the casing 110. They are also held between the side plates 130 and 131 along the crosswise direction and are electrically connected in series via a plurality of conductive members 150 referred to as bus bars.

The lithium ion electricity storage elements 140 each assume the shape of a circular column, which is a sealed canister with an open end of a battery case, filled with an electrolyte and housing other components such as a battery element (battery element portion) and a safety valve closed off with a battery lid. The battery element is a coil winding formed by layering a positive pole plate and a negative pole plate one on top of the other via a separator constituted of a porous insulating material and winding the layered assembly in a coil. The battery case is a cylindrical metal canister with a solid bottom having an open end. The battery lid, which is a round seal member constituted of metal, is fixed through caulking to the open end of the battery case via an insulating member together with other components such as the safety valve. The positive pole-side of the battery element is electrically connected to the battery lid. Thus, the battery lid forms a positive pole-side terminal assuming a potential equal to that on the positive pole-side of the battery element. The negative pole-side of the battery element is electrically connected to a bottom portion of the battery case. Thus, the bottom portion of the battery case forms a negative pole-side terminal assuming a potential equal to the potential on the negative pole-side of the battery element. The insulating member electrically insulates the battery lid forming the positive pole from the battery case forming the negative pole. A tube 148 constituted of insulating material covers the outer circumferential surface of the battery case so as to assure electrical insulation.

The safety valve is a rupture valve that forms an opening when the internal pressure in the battery case reaches a predetermined level due to an abnormality such as an overcharge. It is constituted with a member that includes cleaving grooves. The safety valve fulfills two functions. Namely, once the safety valve ruptures, it functions as a fuse mechanism that cuts off the electrical connection between the battery lid and the positive pole-side of the battery element. In addition, once it ruptures, it functions as a pressure-reducing mechanism that lets out gas having been generated inside the battery case, i.e., a vapor of carbon oxide gas (emitted matter) containing the electrolyte, to the outside of the battery case by opening the battery case. Through the safety valve, a high level of safety is assured in the lithium ion electricity storage element 140 even in the event of an abnormality such as an overcharge. In addition, a cleaving groove is also formed at the bottom portion of the battery case so as to cause a rupture when the internal pressure at the battery case reaches a predetermined level due to an abnormality such as an overcharge. Thus, the gas generated inside the battery case can be released through the negative-pole terminal side as well.

The nominal output voltage of the lithium ion electricity storage elements 140 is 3.0 to 4.2 V, whereas the nominal mean output voltage is 3.6 V

The battery assembly 120 in the embodiment is formed by disposing sixteen lithium ion electricity storage elements 140 assuming a cylindrical shape as described earlier in a specific array pattern inside the casing 110. More specifically, the battery assembly 120 is formed by laying down the sixteen lithium ion electricity storage elements 140 so that their central axes extend along the crosswise direction, forming a first electricity storage element row 121 and a second electricity storage element row 122 each made up of eight lithium ion electricity storage elements 140 set along the lengthwise direction so that their central axes range side-by-side in parallel to one another along the lengthwise direction, and layering the first electricity storage element row 121 and the second electricity storage element row 122 one on top of the other along the height-wise direction (by stacking them straight or layering them with an offset). Namely, the battery assembly 120 includes electricity storage elements arrayed over two stages or two layers along the height-wise direction and eight columns along the lengthwise direction.

The first electricity storage element row 121 and the second electricity storage element row 122 are offset relative to each other along the lengthwise direction. Namely, the first electricity storage element row 121, which is set further toward the intake flow passage forming plate 111 than the second electricity storage element row 122, is offset further toward the cooling medium intake port 114 than the second electricity storage element row 122, whereas the second electricity storage element row 122, which is set further toward the outlet flow passage forming plate than the first electricity storage element row 121, is offset further toward the cooling medium outlet port 115 than the first electricity storage element row 121. In the embodiment, the first electricity storage element row 121 and the second electricity storage element row 122 are offset relative to each other along the lengthwise direction so that the position assumed along the lengthwise direction by the central axis of the lithium ion electricity storage element 140 in the first electricity storage element row 121 taking up the position closest to the cooling medium outlet port 115 is set at the middle point between the central axis of the lithium ion electricity storage element 140 in the second electricity storage element row 122 taking up the position closest to the cooling medium outlet port 115 and the central axis of the next lithium ion electricity storage element 140 in the second electricity storage element row.

The lithium ion electricity storage elements 140 in the first electricity storage element row 121 are set side-by-side so that the terminals at alternate electricity storage elements assume opposite orientations. Namely, the terminals at the lithium ion electricity storage elements 140 facing toward the side plate 130 form an alternate pattern of a "negative-pole terminal - positive pole terminal - negative-pole terminal... positive pole terminal" starting from the side where the cooling medium intake port 114 is present and advancing toward the cooling medium outlet port 115. Likewise, the lithium ion electricity storage elements 140 in the second electricity storage element row 122 are set side-by-side so that the terminals at alternate electricity storage elements assume opposite orientations. Namely, the terminals at the lithium ion electricity storage elements 140 facing toward the side plate 130 form an alternate pattern of a "positive pole terminal - negative-pole terminal - positive pole terminal... negative-pole terminal" starting from the side where the cooling medium intake port 114 is present and advancing toward the cooling medium outlet port 115. In addition, the pattern formed with the terminals at the lithium ion electricity storage elements 140 in the first electricity storage element row 121, starting on the side where the cooling medium intake port 114 is present and advancing toward the cooling medium outlet port 115, is different from the pattern formed with the terminals at the lithium ion electricity storage elements 140 in the second electricity storage element row 122, starting on the side where the cooling medium intake port 114 is present and advancing toward the cooling medium outlet port 115.

As described above, the first electricity storage element row 121 and the second electricity storage element row 122 are offset along the lengthwise direction in the embodiment, so as to minimize the measurement of the battery assembly 120 taken along the height-wise direction and thus reduce the size of the high potential-side battery block 110a along the height-wise direction.

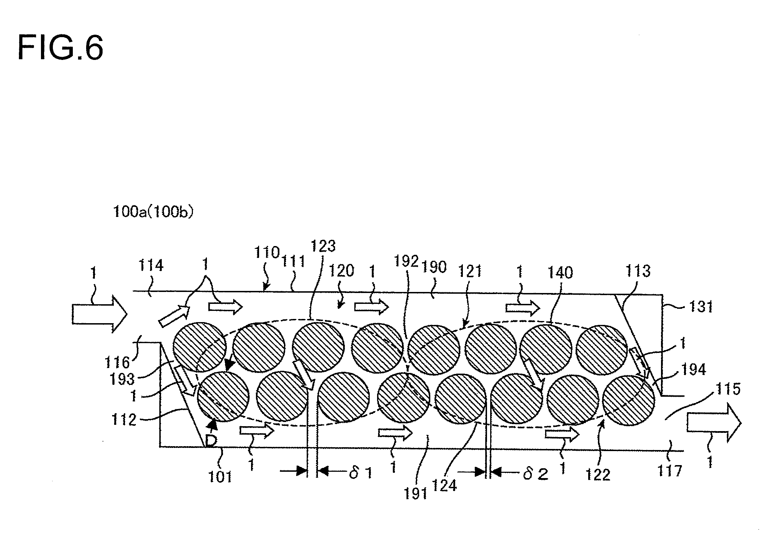

In addition, the battery assembly 120 achieved in the embodiment includes two separate functional groups, i.e., a first battery assembly group 123 located on the cooling medium upstream side and a second battery assembly group 124 located on the cooling medium downstream side (see FIG. 6). Namely, the battery assembly 120 includes the first battery assembly group 123 constituted with an aggregate of eight lithium ion electricity storage elements 140, made up with lithium ion electricity storage elements 140 in the first electricity storage element row 121 taking up four successive positions starting at the end position on the side where the cooling medium intake port 114 is present and moving toward the cooling medium outlet port 115, and lithium ion electricity storage elements 140 in the second electricity storage element row 122 taking up four successive positions also starting the end position on the side where the cooling medium intake port 114 is present, and moving toward the cooling medium outlet port 115. It further includes the second battery assembly group 124 constituted with an aggregate of eight lithium ion electricity storage elements 140, made up with lithium ion electricity storage elements 140 in the first electricity storage element row 121 taking up four successive positions starting at the end position on the side where the cooling medium outlet port 115 is present and moving toward the cooling medium intake port 114 and lithium ion electricity storage elements 140 in the second electricity storage element row 122 taking up four successive positions also starting at the end position on the side where the cooling medium outlet port 115 is present and moving toward the cooling medium intake port 114.

A clearance δ1 formed between any two lithium ion electricity storage elements 141 set side-by-side along the lengthwise direction in the first electricity storage element row 121 or the second electricity storage element row 122 belonging to the first battery assembly group 123 (the shortest distance between the two lithium ion electricity storage elements 140 along the lengthwise direction) is set larger than a clearance δ2 formed between any two lithium ion electricity storage elements 141 set side-by-side along the lengthwise direction in the first electricity storage element row 121 or the second electricity storage element row 122 belonging to the second battery assembly group 124 (the shortest distance between the two lithium ion electricity storage elements 140 along the lengthwise direction). The clearance between the lithium ion electricity storage element 140 in the first battery assembly group 123 assuming the position closest to the cooling medium outlet port 115 and the lithium ion electricity storage element 140 in the second battery assembly group 124 assuming the position closest to the cooling medium intake port 114 (the shortest distance between the two lithium ion electricity storage elements along the lengthwise direction) is set to match the clearance δ2.

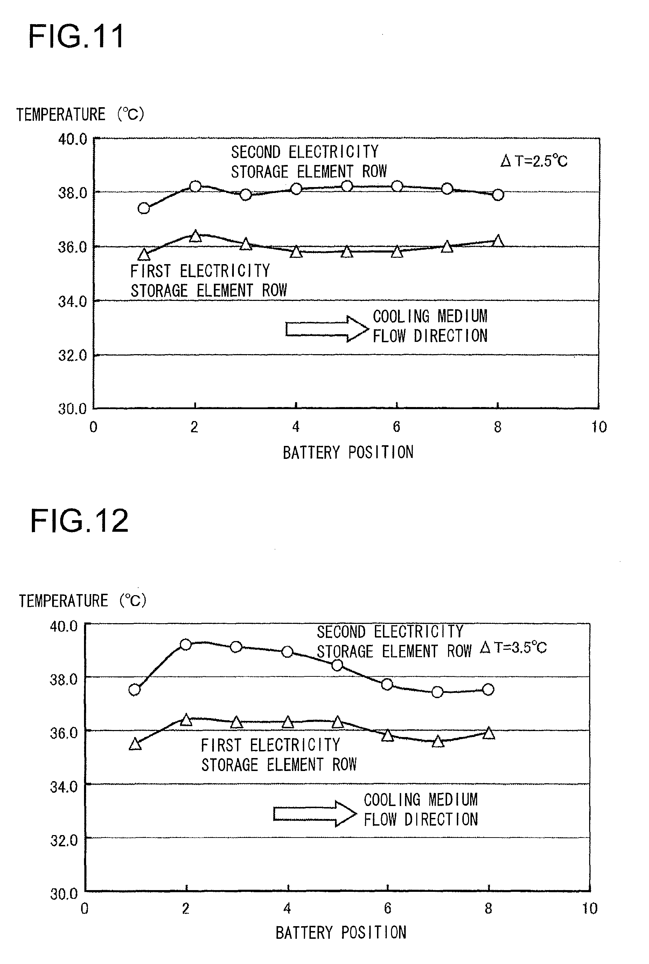

In the embodiment, the lithium ion electricity storage elements 140 in one group in the battery assembly 120 are set side-by-side along the lengthwise direction with a clearance different from the clearance with which the lithium ion electricity storage elements 140 are set side-by-side along the lengthwise direction in the other group, as described above. Namely, the clearance between any two lithium ion electricity storage elements 140 set side-by-side along the lengthwise direction in the group located on the side where the cooling medium intake port 114 is present is set larger than the clearance formed between the lithium ion electricity storage elements 140 set side-by-side along the lengthwise direction in the group located on the side where the cooling medium outlet port 115 is present. As a result, the extent of temperature increase at the plurality of lithium ion electricity storage elements 140 can be more effectively kept down and a more uniform increase in the temperature can be assured for the plurality of lithium ion electricity storage elements 140, thereby achieving better cooling performance with which the lithium ion electricity storage elements 140 are cooled, as described in detail later in reference to FIGS. 11 through 13.

It is to be noted that while the battery assembly 120 is divided into specific groups and the clearance formed between the lithium ion electricity storage elements 140 set side-by-side along the lengthwise direction in one group is set to a value different from the value representing the clearance between the lithium ion electricity storage elements 140 set side-by-side along the lengthwise direction in the other group in the embodiment, a largest clearance may be formed between the lithium ion electricity storage element 140 disposed at the end position located on the side where the cooling medium intake port 114 is present and the lithium ion electricity storage element 140 disposed next along the lengthwise direction, a smallest clearance may be formed between the lithium ion electricity storage element 140 disposed at the end position located on the side where the cooling medium outlet port 115 is present and the lithium ion electricity storage element 140 disposed next along the lengthwise direction and the clearances formed between lithium ion electricity storage elements 140 set side-by-side along the lengthwise direction in the midrange may be gradually narrowed from the side where the cooling medium intake port 114 is present toward the side where the cooling medium outlet port 115 is present. As a further alternative, the battery assembly 120 may be divided into a larger number of groups so as to adjust the clearances between the lithium ion electricity storage elements 140 set side-by-side along the lengthwise direction in finer increments.

The conductive members 150 are each a copper plate member that is welded to the positive electrode terminal of one lithium ion electricity storage element 140 and the negative electrode terminal of the next lithium ion electricity storage element 140 in each pair of lithium ion electricity storage elements 140 disposed side-by-side among the lithium ion electricity storage elements 140 are electrically connected through a specific connection pattern, so as to electrically connect the two lithium ion electricity storage elements 140 to each other. The copper plate member is embedded in the side plate 130 or 131 with the areas of the copper plate member where it is welded to the two lithium ion electricity storage elements 140 disposed side-by-side exposed to the outside. Namely, the plurality of conductive members 150 are formed as integrated parts of each side plate 130 or 131. The conductive members 150 do not need to be constituted of copper and they may instead be constituted with another metal such as iron. An area of a conductive member 150 where it is welded to a lithium ion electricity storage element 140 is a projecting surface projecting further toward the lithium ion electricity storage element 140 relative to the other area (molded area) of the conductive member 150, with a round through hole 151 passing through along the crosswise direction, which is formed at the center of the welding area. The through hole 151 provides a gas passage for gas that may be produced by the lithium ion electricity storage element 140.

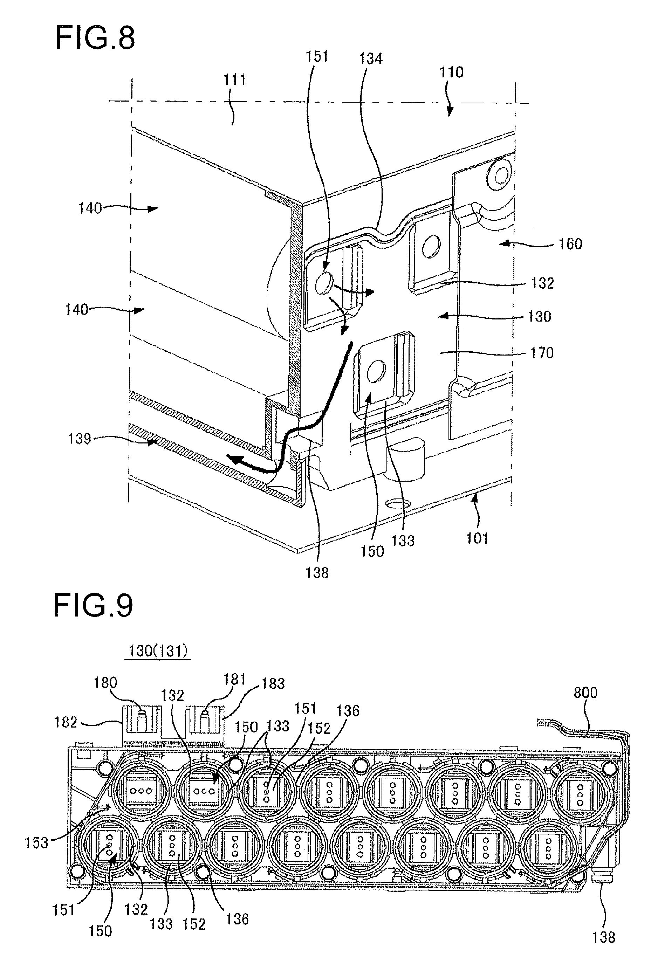

Sixteen through holes 132 are formed at each of the side plates 130 and 131 so as to pass through the wall of the side plate along the crosswise direction. The sixteen through holes 132 are formed each in correspondence to one of the sixteen lithium ion electricity storage elements 140 arrayed as described earlier so that each hole opening is set in correspondence to the electrode position assumed at one of the lithium ion electricity storage elements 140. The sixteen through holes 132 are formed so that their openings located further toward the lithium ion electricity storage elements 140, assume a circular shape and their openings on the side opposite from the lithium ion electricity storage elements 140 assume a quadrangular shape. The opening areas of the through holes on both sides are smaller than the size of the terminal surfaces at the lithium ion electricity storage elements 140 present on the two sides facing each other along the axial direction (the crosswise direction). Inside each of the sixteen through holes 132, a welding area (projecting surface) 152, over which a conductive member 150 is fused with the corresponding lithium ion electricity storage element 140 formed so as to disallow a clear passage through the crosswise direction. As a result, the sixteen through holes 132 are mostly blocked by the conductive members 150. A clearance 133 is formed between the wall surface of each through hole 132 and the conductive member 150 therein (see FIG. 8). The clearance 133 is formed so as to communicate between the space beyond the conductive member 150 further toward the lithium ion electricity storage element 140 and the space located on the opposite side from the lithium ion electricity storage element side and thus, the gas emitted from the lithium ion electricity storage element 140 can be released into the space located on the side opposite from the lithium ion electricity storage element side.

The sixteen lithium ion electricity storage elements 140 are held between the side plates 130 and 131 so that the terminal surfaces located on the side toward the side plate 130 (the end surfaces located toward the side plate 130 along the central axes (along the crosswise direction)) block the openings at the sixteen through holes 132 in the side plate 130, located on the side toward the side plate 131, from the side closer to the side plate 131 and that the terminal surfaces located on the side toward the side plate 131 (the end surfaces located toward the side plate 131 along the central axes (along the crosswise direction)) block the openings at the sixteen through holes 132 in the side plate 131, located on the side toward the side plate 130, from the side closer the side plate 130.

The welding areas 152 of the conductive members 150 located at the side plate 130 are each fused to the terminal surface of the corresponding lithium ion electricity storage element among the lithium ion electricity storage elements 140, present on the side toward the side plate 130, through spot welding performed from the side of the side plate 130 opposite from the side where the side plate 131 is located. The welding areas 152 of the conductive members 150 located at the side plate 131 are each fused to the terminal surfaces of the corresponding lithium ion electricity storage element among the lithium ion electricity storage elements 140, present on the side toward the side plate 131, through spot welding performed from the side of the side plate 131 opposite from the side where the side plate 130 is located. As the conductive members 150 are bonded as described above, the sixteen lithium ion electricity storage elements 140 become electrically connected in series.

A shield member 160 referred to as a side cover is locked onto the side of the side plate 130, opposite from the side on which the side plate 131 is located, via locking means 161 such as bolts or rivets. The shield member 160 shields the side of the side plate 130 opposite from the side where the side plate 131 is located, so as to form a space on the side of the side plate 130 opposite from the side where the side plate 131 is located. Likewise, a shield member 160 is locked onto the side of the side plate 131 opposite from the side where the side plate 130 is located via locking means 161 such as bolts or rivets, so as to form a space on the side of the side plate 131 opposite from the side where the side plate 130 is located. The shield plates 160 are each constituted with a flat plate formed by press-machining a metal plate such as an iron plate or an aluminum plate or a flat plate formed by molding a resin such as PBT. The shield plates are formed so as to assume contours substantially identical to those of the side surfaces of the side plates 130 and 131 with areas surrounding the points facing opposite the through holes 132 uniformly recessed toward the side opposite from the sides where the side plates 130 and 131 are present. The areas of the side plates 130 and 131 facing opposite the recessed portions of the shield plates 160, too, are uniformly recessed toward the lithium ion electricity storage elements 140.

The space formed between the shield member 160 and the side surface of the side plate 130 (where their recessed portions are present) and the space formed between the shield member 160 and the side surface of the side plate 131 (where their recessed portions are present) are each isolated with high levels of airtightness and water-tightness from the cooling passage adjacent thereto along the crosswise direction, and the spaces each form a gas release chamber (or a gas release passage) 170 into which the gaseous vapor emitted from the lithium ion electricity storage elements 140 is released separately from the cooling medium distributed through the cooling passage. The gas release chambers 170 are formed as chambers enclosed by the shield members 160 and the side plates 130 and 131 with the through holes 132 closed off by the terminal surfaces of the lithium ion electricity storage elements 140. Thus, the terminal surfaces of the lithium ion electricity storage elements 140 are directly exposed in the gas release chambers 170, so as to allow the gas emitted through the terminal surfaces of the lithium ion electricity storage elements 140 to be released directly into the gas release chambers through the through holes 151 at the conductive members 150 and the clearances 133.

In the embodiment, the gas emitted from the lithium ion electricity storage elements 140 is processed separately from the cooling medium flowing through the cooling passages, by guiding the gas to the gas release chambers 170 isolated from the cooling passages formed inside the casing 110. Thus, the gas emitted from the lithium ion electricity storage elements 140 is not released into the cabin together with the cooling medium and the driver and passengers are spared any discomfort that may otherwise be caused by the gas emitted from the lithium ion electricity storage elements 140.

The side plates 130 and 130 each include a gas discharge passage 138 through which the gas (a gaseous vapor containing a liquid such as the electrolyte) having been released into the corresponding gas release chamber 170 is discharged to the outside of the battery block. In order to ensure that the liquid such as the electrolyte contained in the gas is discharged efficiently, the gas discharge passage 138 is formed to open over a lower area of the side plate 130. More specifically, it is formed so as to open at the end of a recessed portion of the side plate 130 located on one side along the lengthwise direction and range over the lower ends (toward the module-base 101) located along the height-wise direction of the recessed portions of the side plate 130. The front end of the gas discharge passage 138 forms a pipe to which a gas discharge pipe 139 that guides the gas through the gas discharge passage 138 to the outside is connected.

Although not shown, a piping, extending downward from the installation location of the lithium ion battery device 1000 toward the surface of the road upon which the vehicle 3000 is traveling, is installed in the vehicle. The gas discharge pipe 139 is connected to the piping. Thus, the gas emitted through the terminal surfaces of the lithium ion electricity storage elements 140, which contains a liquid such as the electrolyte, is first released into the gas release chambers 170 and then is led to the outside of the vehicle by traveling through the openings of the gas discharge passages 138, the gas discharge passages 138, the gas discharge pipes 139 and the piping in this order.

In the embodiment, the gas containing a liquid such as the electrolyte, having originated in the lithium ion electricity storage elements 140 and released into the gas release chambers 170, is discharged to the outside via the gas discharge passages 138 formed at the lower ends of the recessed portions of the side plates 130 and 131 along the height-wise direction. As a result, the liquid such as the electrolyte contained in the gas is not allowed to collect in the gas release chambers 170 and is instead discharged to the outside of the vehicle.

At the side plate 130, a single groove 134 running along the outer edge of the side plate 130 is formed at the wall surface located on the side opposite from the side toward the side plate 131, so as to surround the openings of the sixteen through holes 132 on the side opposite from the side toward the side wall 131. Likewise, a single groove 134 is formed at the wall surface of the side plate 131 located on the side opposite from the side toward the side plate 130. A ring-shaped elastic seal member 135 (e.g., a rubber O-ring) is fitted in each groove 134. As an alternative, a liquid gasket may be used as the seal member 135. The area of the side plate 130 further inward relative to the groove 34 formed at the wall surface of the side plate 130 on the side opposite from the side toward the side plate 131 and the area of the side plate 131 further inward relative to the groove 134 formed at the wall surface of the side plate 131 located on the side opposite from the side further toward the side plate 136, i.e., the areas facing opposite the recessed portions of the shield members 160, are both uniformly recessed toward the lithium ion electricity storage elements 140.

Sixteen grooves 136, each running along the edge of the opening of one of the sixteen through holes 132 on the side toward the side wall 131, are formed so as to surround the openings of the through holes at the wall surface of the side plate 130 located on the side toward the side plate 131. Likewise, sixteen grooves 136 are formed at the wall surface of the side plate 131 located on the side toward the side plate 130. A ring-shaped elastic seal member 137 (e.g., a rubber O-ring) is fitted inside each groove 136. The seal member 136 may be constituted with a liquid gasket, instead.

In the embodiment, the spaces formed between the side plate 130 and the shield member 160 and between the side plate 131 and the shield member 160 are sealed with the seal members 135 and the spaces formed between the side plate 130 and the lithium ion electricity storage elements 140 and between the side plate 131 and the lithium ion electricity storage elements 140 are sealed with the seal members 137. Thus, even higher levels of airtightness and water-tightness are assured between the gas release chambers 170 and the outside and between the gas release chambers 170 and the cooling passages.

A DC positive pole-side input/output terminal 180 electrically connected to the positive pole-side of the battery assembly 120 and a negative pole-side input/output terminal 181 electrically connected to the negative pole-side of the battery assembly 120 are disposed side by side along the lengthwise direction at the outer edge surface of the side plate 130 over an area located toward the upper end along the height-wise direction (toward the intake flow passage forming plate 111) and also toward the other end along the lengthwise direction (toward the cooling medium outlet port 115). A terminal of the positive pole-side power cable 610 is connected to the positive pole-side input/output terminal 180. A terminal of a cable electrically connected to one end of the SD switch 700 is connected to the negative pole-side input/output terminal 181. A terminal of a cable electrically connected to another end of the SD switch 700 is connected to the position pole-side input/output terminal at the low potential-side battery block 110b. A terminal of the negative pole-side power cable 620 is connected to the negative pole-side input/output terminal 181 at the low potential-side battery block 110b.

The positive pole-side input/output terminal 180 and the negative pole-side input/output terminal 181 are surrounded on three sides by surrounding members 182 and 183 respectively. The terminals of the corresponding cables are connected to the positive pole-side input/output terminal 180 and the negative pole-side input output terminal 181 through openings at the surrounding members 182 and 183 located toward the side plate 131. The surrounding members 182 and 183 are moldings formed as integrated parts of the side plate 130 by using the electrically insulating resin constituting the side plate 130 and are formed so as to range upright from the outer edge surface of the side plate 130 along the height-wise direction.

An intake-side flow passage 190 is formed between the intake flow passage forming plate 111 and the first electricity storage element row 121. An outlet-side flow passage 191 is formed between the outlet flow passage forming plate (module based 101) and the second electricity storage element row 122. Clearances set between the first electricity storage element row 121 and the second electricity storage element row 122, between the lithium ion electricity storage elements 140 in the first electricity storage element row 121, disposed side-by-side along the lengthwise direction, and between the lithium ion electricity storage elements 140 in the second electricity storage element row 122, disposed side-by-side along the lengthwise direction, form electricity storage element-to-electricity storage element flow passages 192. The clearances formed between the lithium ion electricity storage elements 140 set side-by-side along the lengthwise direction in the first electricity storage element row 121 and between the lithium ion electricity storage elements 140 set side-by-side along the lengthwise direction in the second electricity storage element row 122 assume two different ranges, as explained earlier. An intake-side guide passage 193 is formed between the intake-side guide plate 112 and the lithium ion electricity storage elements 140 in the first electricity storage element row 121 and the second electricity storage element row 122 assuming positions closest to the cooling medium intake port 114. An outlet-side guide passage 194 is formed between the outlet-side guide plate 113 and the lithium ion electricity storage elements 140 in the first electricity storage element row 121 and the second electricity storage element row 122 assuming positions closest to the cooling medium outlet port 115.

The intake-side flow passage 190, the outlet-side flow passage 191, the electricity storage element-to-electricity storage element flow passages 192, the intake-side guide passage 193 and the outlet-side guide passage 194 are in communication with one another.

The intake-side flow passage 190 is a distribution-side flow passage through which the cooling medium 1 having flowed into the casing 110 via the cooling medium intake port 114 is guided to the electricity storage element-to-electricity storage element flow passages 192 and the outlet-side guide passage 194, and extends linearly along the lengthwise direction from the cooling medium intake port 114 toward the side where the cooling medium outlet port 115 is located along the first electricity storage element row 121 and the intake passage forming plate 111.

The outlet-side flow passage 191 is a collection-side flow passage through which the cooling medium 1 having flowed through the intake-side guide passage 193 and the electricity storage element-to-electricity storage element flow passages 192 is guided to the cooling medium outlet port 115, and extends linearly along the lengthwise direction from the side where the cooling medium intake port 114 is located toward the cooling medium outlet port 115 along the outlet flow passage forming plate (module base 101) and the second electricity storage element row 122.

The electricity storage element-to-electricity storage element flow passages 192 are internal passages through which the cooling medium 1 having been guided to the intake-side flow passage 190 and the intake-side guide passage 193 is distributed over the entire battery assembly 120 and extend in various directions inside the battery assembly 120 in a network pattern.

The intake-side guide passage 193 is a passage through which the cooling medium 1 having flowed into the casing 110 through the cooling medium intake port 114 is distributed through the area between the intake-side guide plate 112 and the lithium ion electricity storage elements 140 assuming the positions closest to the cooling medium intake port 114 in the first electricity storage element row 121 and the second electricity storage element row 122 and is then guided to the outlet-side flow passage 191. It extends diagonally from the cooling medium intake port 114 toward the outlet-side flow passage 191 along the lithium ion electricity storage elements 140 assuming the positions closest to the cooling medium intake port 114 in the first electricity storage element row 121 and the second electricity storage element row 122 and also along the intake-side guide plate 112.

The outlet-side guide passage 194 is a passage through which the cooling medium 1 having been guided to the intake-side flow passage 190 is distributed through the area between the outlet-side guide plate 113 and the lithium ion electricity storage elements 140 assuming the positions closest to the cooling medium outlet port 115 in the first electricity storage element row 121 and the second electricity storage element row 122 and is then guided to the cooling medium outlet port 115. It extends diagonally from the intake-side flow passage 190 toward the cooling medium outlet port 115 along the lithium ion electricity storage elements 140 assuming the positions closest to the cooling medium outlet port 115 in the first electricity storage element row 121 and the second electricity storage element row 122 and also along the outlet-side guide plate 115.

The cooling medium intake port 114 is formed on a line extending along the lengthwise direction from the first electricity storage element row 121 and the intake-side flow passage 190. The cooling medium outlet port 115 is formed on a line extending along the lengthwise direction from the second electricity storage element row 122 and the outlet-side flow passage 191. Thus, the cooling medium intake port 114 and the cooling medium outlet port 115 are offset relative to each other along the height-wise direction. Assuming that the side where the outlet flow passage forming plate (module base 101) is the installation side, the cooling medium intake port 114 takes up a position higher than the position of the cooling medium outlet port 115 in the embodiment.

Assuming that the side where the intake flow passage forming plate 111 is present along the height-wise direction is the higher side (the side where the outlet flow passage forming plate (module base 1101) is present is the installation side), the position assumed by the central axis of the cooling medium intake port 114 along the height-wise direction is higher than that assumed by the central axis of the lithium ion electricity storage element 140 in the first electricity storage element row 121 taking up the position closest to the cooling medium intake port 114 but is lower than the position taken up by the lithium ion electricity storage elements 140 in the first electricity storage element row 121 at their portions closest to the intake-side flow passage 190 (toward the intake flow passage forming plate 111).

The position assumed by the central axis of the cooling medium outlet port 115 along the height-wise direction is lower than that assumed by the central axis of the lithium ion electricity storage element 140 in the second electricity storage element row 122 taking up the position closest to the cooling medium outlet port 115 but is higher than the position assumed by the lithium ion electricity storage elements 140 in the second electricity storage element row 122 at their portions closest to the outlet-side flow passage 191 (toward the outlet flow passage forming plate (module base 1101*)).

The lithium ion electricity storage element 140 disposed at the position closest to the cooling medium intake port 114 in the first electricity storage element row 121 also functions as a cooling medium flow-dividing mechanism that divides the cooling medium 1 having flowed into the casing 110 via the cooling medium intake port 114 into a cooling medium flow to travel into the intake-side flow passage 190 and a cooling medium flow to travel into the intake-side guide passage 193.

In the embodiment, the lithium ion electricity storage element 140 is used as a cooling medium flow-dividing mechanism and thus, the cooling medium 1 can be supplied into the intake-side guide passage 193 into which the cooling medium 1 cannot be distributed readily, without requiring a special flow-dividing mechanism.

It is to be noted that while the battery module in the embodiment described above is installed by positioning the intake flow passage forming plate 111 on the top side and the outlet flow passage forming plate (module base 101) on the bottom side, this positional relationship may be reversed, i.e., the entire assembly may be rotated by 180° around a rotational axis set at the center of a longitudinal section, so as to switch the positions of the cooling medium intake port 114 and the cooling medium outlet port 115 assumed along the height-wise direction.

Next, in reference to FIG. 9, the flow of the cooling medium 1 is explained.

As the fan installed at the cooling duct of the onboard electrical system is driven, the air inside the cabin, to be used as the cooling medium 1, flows into the casing 110 via the cooling medium intake duct 116 and the cooling medium intake port 114. The cooling medium 1 having flowed in first contacts the lithium ion electricity storage element 140 disposed at the position closest to the cooling medium intake port 114 in the first electricity storage element row 121. Consequently, the initial flow of the cooling medium 1 is divided into a primary flow to travel through the intake-side flow passage 190 and a secondary flow to travel through the intake-side guide passage 193 at a flow rate lower than that of the primary flow.

The flow passage sectional area of the cooling medium intake port 114 along the cooling medium flow direction is smaller than the flow passage sectional area assumed within the casing 110 along the cooling medium flow direction. For this reason, the flow velocity of the cooling medium 1 having been drawn into the casing 110 through the cooling medium intake port 114 is high. Subsequently, the flow velocity of the cooling medium 1 decreases as it flows toward the downstream side (toward the cooling medium outlet port 114).

As the cooling medium 1 in the primary flow traveling through the intake-side flow passage 190 moves from the cooling medium intake port 114 toward the outlet-side guide passage 194, it cools the lithium ion electricity storage elements 140 in the first electricity storage element row 121 on the side facing toward the intake flow passage forming plate 111 and is distributed into the individual electricity storage element-to-electricity storage element flow passages 192 and the outlet-side guide passage 194, thereby becoming a plurality of distributive flows.

As the cooling medium 1 in the secondary flow traveling through the intake-side guide passage 193 flows from the cooling medium intake port 114 toward the outlet-side flow passage 191, it cools the lithium ion electricity storage elements 140 taking up the positions closest to the cooling medium intake port 114 in the first electricity storage element row 121 and the second electricity storage element row 122 on the side thereof facing toward the cooling medium intake port 114 before the cooling medium, traveling in a diagonal flow, reaches the outlet-side flow passage 191.

The cooling medium 1 in the distributive flows cools the outer circumferential surfaces of the lithium ion electricity storage elements 140 as it moves from the intake-side flow passage 190 toward the outlet flow passage 190 through the individual electricity storage element-to-electricity storage element flow passages 192 with a relative tilt before it reaches the outlet-side flow passage 191. The clearances forming the electricity storage element-to-electricity storage element flow passages 192 fulfill a fluid dynamic function similar to that of holes in a porous plate. In other words, the distributive flows of the cooling medium 1 can be regulated via the clearances in the electricity storage element-to-electricity storage element flow passages in the embodiment. In addition, by setting the dynamic pressure of the cooling medium 1 and the pressure loss occurring in the clearances at the electricity storage element-to-electricity storage element flow passages 192 at optimal levels, the cooling medium 1 can be distributed evenly to cool the various lithium ion electricity storage elements 140 with a uniform distributive flow rate.

Among the lithium ion electricity storage elements 140 cooled in sequence with the cooling medium 1 at a given flow velocity, starting with the lithium ion electricity storage elements closest to the cooling medium intake port 114, a lithium ion electricity storage element 140 closer to the cooling medium outlet port 115 is bound to remain warmer, since the temperature of the cooling medium 1 traveling from the cooling medium intake port 114 toward the cooling medium outlet port 115 rises and the cooling effect of the cooling medium 1 thus diminishes. Accordingly, the battery assembly 120 is divided into the first battery assembly group 123 and the second battery assembly group 124 and clearances (electricity storage element-to-electricity storage element flow passages 192) δ1 between the lithium ion electricity storage elements 140 set next to each other along the lengthwise direction in the first battery assembly group 123 is set greater than the clearances (electricity storage element-to-electricity storage element flow passages 192) δ2 between the lithium ion electricity storage elements 140 set next to each other along the lengthwise direction in the second battery assembly cell group 124 in the embodiment as described above so as to allow the cooling medium 1 to flow through the electricity storage element-to-electricity storage element flow passages 192 in the first battery assembly group 123, located on the upstream side in the flow path of the cooling medium 1 where the battery temperature tends to be low, at a lower flow velocity and allow the cooling medium 1 to flow through the electricity storage element-to-electricity storage element flow passages 192 in the second battery assembly group 124, located on the downstream side in the flow path of the cooling medium 1 where the battery temperature tends to be high, at a higher flow velocity. Through these measures, the heat transfer (heat exchange) between the lithium ion electricity storage elements 140 in the first battery assembly group 123 and the cooling medium 1 is deterred and the heat transfer (heat exchange) between the lithium ion electricity storage elements 140 in the second battery assembly group 124 and the cooling medium 1 is promoted. As a result, the extent of temperature increase occurring at each lithium ion electricity storage element 140 as it is charged and discharged can be reduced. At the same time, uniformity is achieved with regard to the temperature increase at the lithium ion electricity storage elements 140 disposed from the upstream side through the downstream side in the flow path of the cooling medium 1 by adopting the embodiment described above. In other words, better cooling performance over the related art is assured through the embodiment.

The cooling medium 1 in the distributive flow traveling through the outlet-side guide passage 194 cools the lithium ion electricity storage elements 140 assuming the positions closest to the cooling medium outlet port 115 in the first electricity storage element row 121 and the second electricity storage element row 122 on the side thereof facing toward the cooling medium outlet port 115 as it flows diagonally from the intake-side flow passage 190 toward the cooling medium outlet port 115.

A collective flow of the cooling medium 1 traveling through the outlet-side flow passage 191 is formed as the secondary flow of the cooling medium 1 having traveled through the intake-side guide passage 193 and the distributive flows of the cooling medium 1 having traveled through the various electricity storage element-to-electricity storage element flow passages 192 join one another. The cooling medium in the collective flow cools the lithium ion electricity storage elements 140 in the second electricity storage element row 122 on the side thereof facing toward the outlet flow passage forming plate (module base 101) as it flows from the intake-side guide passage 193 toward the cooling medium outlet port 115.

Next, in reference to FIG. 9, the installation layout of connection lines 800 is described.

The connection lines 800 are voltage detection lines used to detect voltages at the individual lithium ion electricity storage elements 140. They extend from the casing of the control device 900 to be detailed later to the individual battery blocks, run over the side surfaces of the side plates 130 and 131 facing toward the lithium ion electricity storage elements 140 and are connected to portions of the corresponding conductive members 150, i.e., exposed portions 153 projecting out from the side surfaces of the side plates 130 and 131 facing toward the lithium ion electricity storage elements 140. The connection lines 800 are constituted with insulated wires. The end of each connection line 800 located on the side toward the control device 900 is formed as a connector that can be plugged into a connector at the control device 900.

While the description given above pertains to the high potential-side battery block 100a, the low potential-side battery block 100b adopts a structure identical to that of the high potential-side battery block 100a. Accordingly, the same reference numerals are assigned to components of the low potential-side battery block 100b, which are identical to those of the high potential-side battery block 100a so as to preclude the necessity for an explanation of identical components in the low potential-side battery block 100b.

Next, a method that may be adopted when manufacturing, and more specifically assembling, the high potential-side battery block 100a (the low potential-side battery block 100b) is described.

When assembling the high potential-side battery block 100a (the low potential-side battery block 100b), the sixteen lithium ion electricity storage elements 140 are first set in place. In step 1, the sixteen lithium ion electricity storage elements 140 are placed on a transfer stage in a formation matching the pattern assumed in the battery assembly 120. At this time, a jig is used to support the lithium ion electricity storage elements 140 so as to position them in an upright orientation on the transfer stage, i.e., so as to position the lithium ion electricity storage elements 140 with their terminal surfaces set along the vertical orientation relative to the transfer stage (with the central axes ranging along the vertical direction).

Next, in step 2, either the side plates 130 or the side plate 131 is attached via the seal members 137 onto the individual lithium ion electricity storage elements 140 in the inverted state, so as to place the welding areas 152 of the conductive members 150 in contact with the terminal surfaces of the lithium ion electricity storage elements 140, the conductive members 150 and the terminals at the lithium ion electricity storage elements 140 are fused together through spot welding while the side plate 130 or 131 is held with a specific pressure and a first assembly is thus produced.

Next, in step 3, the first assembly is turned upside down so as to set the fused areas over which the side plate 130 or 131 is fused with the individual lithium ion electricity storage elements 140 to the bottom and the un-fused side of the lithium ion electricity storage elements 140 to the top. Then, the other side plate 131 or 130 is attached via the seal members 137 onto the un-fused side of the lithium ion electricity storage elements 140, the conductive members 150 and the terminals at the lithium ion electricity storage elements 140 are fused together through spot welding while holding the side plate 131 or 130 with a predetermined pressure and thus, a second assembly is produced.

It is to be noted that while an assembly process through which either one of the side plates 130 and 131 is attached to the lithium ion electricity storage elements 140, the conductive members 150 are fused onto the terminal surfaces at the individual lithium ion electricity storage elements 140, the other side plate 131 or 130 is attached to the lithium ion electricity storage elements 140 and the conductive members 150 are fused onto the terminal surfaces of the lithium ion electricity storage elements 140 has been described in reference to the embodiment, the battery assembly may instead be assembled by attaching the various lithium ion electricity storage elements 140 to either the side plate 130 or the side plate 131, attaching the other side plate 131 or 130 to the lithium ion electricity storage elements 140 and then fusing the conductive members 150 with the terminals at the lithium ion cells battery 140 through welding.

Next, in step 4, the integrated unit that includes the intake flow passage forming plate 111, the intake-side guide plate 112, the outlet-side guide plate 113, the cooling medium intake port 114, the cooling medium outlet port 115, the cooling medium intake duct 116 and the cooling medium outlet duct 117 is attached to the second assembly via a seal member (not shown) and the integrated unit is locked onto the side plates 130 and 131 via locking means such as bolts, screws or rivets, thereby producing a third assembly.

It is to be noted that the connection lines 800 disposed in advance at the side plates 130 and 131 are joined at the exposed portions 153 of the conductive members 150.

Then, in step 5, the shield members 160 are attached individually to the side plates 130 and 131 via the seal members 135 and the shield members 160 are locked onto the side plates 130 and 131 via locking means such as bolts, screws or rivets, thereby producing a fourth assembly.

Next, in step 6, two fourth assemblies are placed side-by-side, the module base 101 is attached onto the two fourth assemblies, the module base 101 is locked onto the side plates 130 and 131 via locking means such as bolts, screws or rivets, the support members 102 and 103 are locked onto the ends of the two fourth assemblies on both sides along the lengthwise direction and the casing of the control device 900 is locked astride the two fourth assemblies along the lengthwise direction individually via locking means such as bolts, screws or rivets, thereby producing a fifth assembly.

It is to be noted that while an assembly process through which the integrated unit made up with the intake flow passage forming plate 111, the intake-side guide plate 112, the outlet-side guide plate 113, the cooling medium intake port 114, the cooling medium outlet port 115, the cooling medium intake duct 116 and the cooling medium outlet duct 117, the shield members 160 and the module base 101 are locked onto the assembly in this order, has been described in reference to the embodiment, the order in which these members are locked may be altered. The various members may be locked onto the assembly in any of six different sequences, including the sequence described above.

Then, in step 7, the connectors of the connection lines 800 are connected to the connectors at the control device 900, connectors at signal lines extending from the plurality of temperature sensors (not shown) installed at the individual battery blocks in the battery module 100 are connected to a connector at the control device 900 and a connector of a communication line via which communication with a higher-order control device such as the vehicle controller 30 or the motor controller 23 is conducted, is connected to a connector at the control device 900.

The lithium ion battery device 1000 is assembled by following the assembly steps 1 through 7 described above.

In the embodiment, the conductive members 150, via which the lithium ion electricity storage elements 140 are electrically connected with one another, and the lithium ion electricity storage elements 140 are bonded together in the gas release chambers 170. Thus, there is no need to create a special space for the connection of the lithium ion electricity storage elements 140 and the conductive members 150, and the storage chamber (or cooling chamber) where the lithium ion electricity storage elements 140 are housed and the gas release chambers 170 can be provided through efficient utilization of the available space in the battery module 100. Consequently, the lithium ion electricity storage elements 140 can be exposed into the cooling chamber over large surface areas in the storage chamber (or cooling chamber), thereby assuring efficient cooling of the lithium ion electricity storage elements 140 and enhanced performance characteristics for the battery module 100. At the same time, the gas release chambers 170 are allowed to assume a greater volumetric capacity and thus, the gas emitted from the lithium ion electricity storage elements 140 can be defused more readily, which makes it possible to reduce the temperature and pressure of the released gas more effectively. Furthermore, since the gas temperature and pressure can be reduced easily, the loads applied to the side plates 130 and 131 and the shield members 160 and the loads applied to the seal members 135 and 137 can be reduced.

In addition, the seal members 137 and the seal members 135 in the embodiment assure a high degree of airtightness and water-tightness by sealing any clearances that may be present between the lithium ion electricity storage elements 140 and the side plates 130 and 131 and any clearances that may be present between the shield members 160 and the side plates 130 and 131. Thus, the gaseous vapor containing a liquid such as the electrolyte, emitted from the lithium ion electricity storage elements 140, does not leak to the outside through the gas release chambers 170 or is not allowed to flow into the storage chamber (or cooling chamber) via the gas release chambers 170.

Moreover, the through holes 151 are formed at the conductive members 150 in the embodiment so as to release the gas emitted from the lithium ion electricity storage elements 140 to the gas release chambers 170 through the through holes 151, thereby assuring more reliable release of the gas emitted from the lithium ion electricity storage elements 140.

Also, the gas released into the gas release chambers 170 is discharged through the bottoms of the side plates 130 and 131 via the gas discharge passages 138 and the gas discharge pipes 139 and is thus guided to the outside in the embodiment. This means that the gaseous vapor containing a liquid such as the electrolyte having been emitted from the lithium ion electricity storage elements 140 can be discharged instead of becoming collected at the gas release chambers 170.

In addition, the gas discharge pipe 139 in the embodiment are each connected to the piping 2000 laid out in the vehicle so as to extend downward from the installation location of the lithium ion battery device 1000 toward the ground upon which the vehicle travels. Thus, the gas emitted from the lithium ion electricity storage elements 140 can be discharged to the outside of the vehicle via the piping.

Furthermore, the extent of temperature increase occurring at each lithium ion electricity storage element 140 as it is charged and discharged can be reduced over the related art. At the same time, better uniformity is achieved over the related art with regard to the temperature increase at the lithium ion electricity storage elements 140 disposed from the upstream side through the downstream side in the flow path of the cooling medium 1 by adopting the embodiment described above. As a result, the lithium ion electricity storage elements 140 can be cooled more effectively compared to the related art, and consequently, the variance in the charge/discharge quantity and the variance in the service life among the individual lithium ion electricity storage elements 140 can be further reduced.

Now, in reference to FIGS. 11 through 13, results obtained by analyzing the temperature distribution in the battery assembly 120 achieved in the embodiment are examined.

The temperature distribution analysis results, obtained through a three-dimensional thermal analysis of a disturbance model conducted by using general-purpose fluid software, indicate rises in the temperature manifesting at the various lithium ion electricity storage elements 140 in a battery assembly 120 that charges/discharges with a given charge/discharge pattern, as the battery assembly 120 is cooled with a cooling medium assuming a mean intake flow velocity of approximately 6m/s (equivalent to a cooling medium flow rate of approximately 1 m³/min in the actual three-dimensional machine) and a temperature of 30°C at the intake.

FIG. 11 presents the analysis results pertaining to the embodiment, i.e., analysis results pertaining to the lithium ion electricity storage elements 140 in the first battery assembly group 123 and the second battery assembly group 124, with greater clearances (electricity storage element-to-electricity storage element flow passages 192) δ1 between the lithium ion electricity storage elements 140 present next to each other along the lengthwise direction in the first battery assembly group 123 compared to the clearances (electricity storage element-to-electricity storage element flow passages 192) δ2 between the lithium ion electricity storage elements 140 present next to each other along the lengthwise direction in the second battery assembly group 124. In the embodiment, δ1 is set to a value of 0.07 times the diameter D of the lithium ion electricity storage elements 140 and δ2 is set to a value of 0.05 times the diameter D of the lithium ion electricity storage elements 140. Measured dimensions for δ1 and δ2 may be, for instance, 2.8 mm and 1.8 mm respectively.

It is to be noted that the height of the intake-side flow passage 190, i.e., the dimension measured along the height-wise direction from the point in a lithium ion electricity storage element 140 in the first electricity storage element row 121, which is closest to the intake flow passage forming plate 111, to the inner wall surface of the intake flow passage forming plate 111, and the height of the outlet-side flow passage 191, i.e., the dimension measured along the height-wise direction from the point in a lithium ion electricity storage element 140 in the second electricity storage element row 122, which is closest to the outlet flow passage forming plate (module base 101) to the inner wall surface of the outlet flow passage forming plate (module base 101), are set equal to each other at a value greater than both δ1 and δ2 in the embodiment.

In addition, the clearance constituting the intake-side guide passage 193, i.e., the dimension measured along the lengthwise direction from the point in the lithium ion electricity storage element 140 in the first or second electricity storage element row 121 or 122 that is closest to the cooling medium intake port 114, to the inner wall surface of the intake-side guide plate 112, and the clearance forming the outlet-side guide passage 194, i.e., the dimension measured along the lengthwise direction from the point in the lithium ion electricity storage element 140 in the first or second electricity storage element row 121 or 122 that is closest to the cooling medium outlet port 115, to the inner wall surface of the outlet-side guide plate 113, are set equal to each other at a value substantially equal to either δ1 or δ2.

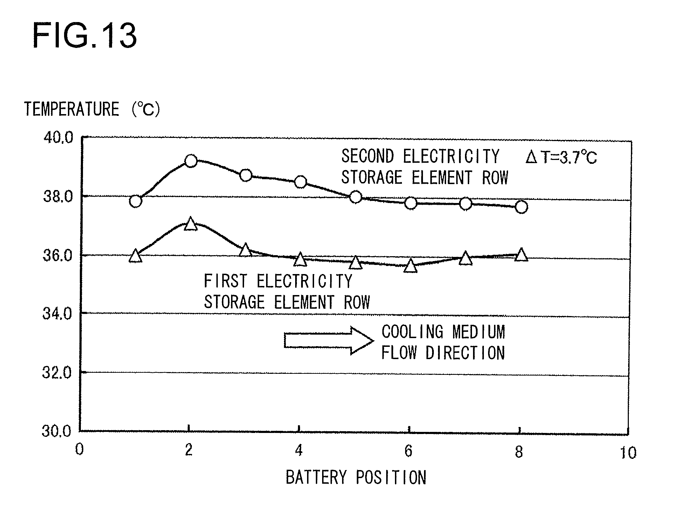

FIG. 12 presents analysis results corresponding to comparison example 1, which are obtained by setting δ1 and δ2 to equal values. FIG. 13 presents analysis results corresponding to comparison example 2, obtained by setting δ1 smaller than δ2, i.e., with δ1 and δ2 assuming a relationship the reverse of that assumed in the embodiment, the analysis results pertaining to which are presented in FIG. 11.

ΔT is the difference between the temperature at the lithium ion electricity storage element 140 registering the highest temperature and the temperature at the lithium ion electricity storage element 140 registering the lowest temperature within the battery assembly 120, i.e., the temperature variance in the battery assembly 120. ΔT takes on a greater value when the temperature variance is more significant.

The analysis results indicate ΔT of 3.5°C for comparison example 1 presented in FIG. 12 and ΔT of 3.7°C for comparison example 2 presented in FIG. 13. ΔT in the embodiment is 2.5°C, as indicated in FIG. 11, showing the least temperature variance.

The battery assembly 120 in the embodiment is assembled by arraying the lithium ion electricity storage elements 140 with varying levels of density. Namely, in the battery assembly 120, the clearances δ1 on the upstream side in the flow path of the cooling medium 1 (over the area where the temperatures of the lithium ion electricity storage elements 140 are bound to be lower), are set wider than the clearances δ2 so as to lower the flow velocity of the cooling medium 1 flowing through the clearances δ1 and thus deter heat transfer between the cooling medium 1 and the lithium ion electricity storage elements 140, whereas the clearances δ2 on the downstream side in the flow path of the cooling medium 1 (over the area where the temperatures at the lithium ion electricity storage elements 140 are bound to be higher) are set narrower than the clearances δ1 so as to raise the flow velocity of the cooling medium 1 flowing through the clearances δ2 and thus actively promote heat transfer between the cooling medium 1 and the lithium ion electricity storage elements 140..

Through the embodiment described above, the extent of temperature increase occurring at each lithium ion electricity storage element 140 as it is charged/discharged can be reduced and better uniformity can be assured with regard to the temperatures at the individual lithium ion electricity storage elements 140. As a result, the variance in the charge/discharge quantity and the variance in the service life among the lithium ion electricity storage elements 140 can be minimized.

It is to be noted that while the electricity storage elements in the battery assembly 120 are divided into two groups and the width of the clearances between the lithium ion electricity storage elements 140 in one group is set different from the width of the clearances between the lithium ion electricity storage elements 140 in the other group in the embodiment described above, the lithium ion electricity storage elements 140 in the battery assembly 120 may be instead divided into three or more groups and the widths of the clearances between the lithium ion electricity storage elements 140 in the different groups may be set so that they are gradually reduced from the upstream side in the flow path of the cooling medium 1 toward the downstream side in the flow path of the cooling medium 1. As an alternative, the widths of the clearances between the lithium ion electricity storage elements 140 may be set so that they gradually become narrower, starting from the upstream side in the flow path of the cooling medium 1. Namely, the widths of the clearances between the lithium ion electricity storage elements 140 may be adjusted in any way, as long as a difference is created between the cooling performance of the cooling medium 1 on the upstream side and the cooling performance of the cooling medium 1 on the downstream side (the difference in the heat transfer between the cooling medium 1 and the lithium ion electricity storage elements 140 on the upstream side and heat transfer between the cooling medium 1 and the lithium ion electricity storage elements 140 on the downstream side, achieved by causing the cooling medium 1 to flow at different flow velocities) and a balanced temperature distribution is assured through the overall battery assembly 120, from the upstream side through the downstream side in the flow path of the cooling medium 1.

Furthermore, by adopting the embodiment in which the cooling medium 1 having been drawn into the casing 110 through the cooling medium intake port 114 is divided into separate flows via the lithium ion electricity storage element 140 disposed at the position closest to the cooling medium intake port 114, the cooling medium 1 can easily be directed into the intake-side guide passage 193 in a separate flow, without having to provide a special flow-dividing mechanism in the casing 110.

Moreover, through the embodiment that includes the first electricity storage element row 121 and the second electricity storage element row 122 disposed with an offset relative to each other along the lengthwise direction, the battery assembly 120 is allowed to assume a smaller dimension along the height-wise direction, which, in turn, makes it possible to reduce the dimension of the high potential-side battery block 110a and the low potential-side battery block 110b measured along the height-wise direction. Ultimately, the battery module 100 in the embodiment itself is allowed to assume a smaller dimension along the height-wise direction.

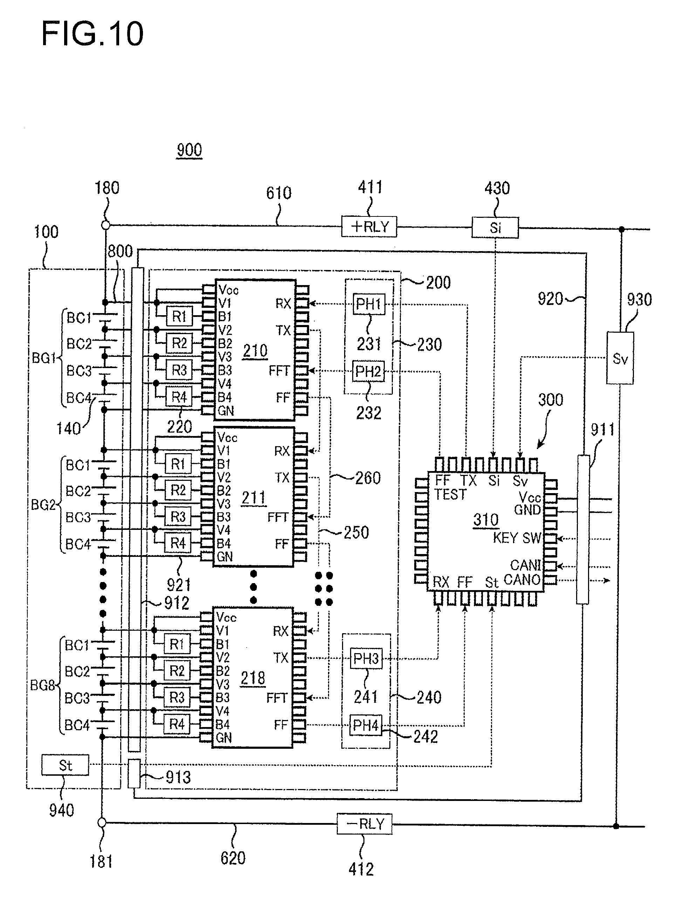

Next, in reference to FIG. 10, the control device 900 is described.

The control device 900 is an electronic circuit device installed atop the battery module 100, i.e., disposed astride both the high potential-side battery block 100a and the low potential-side battery block 100b. It includes a casing 910 and a single circuit board 920 housed inside the casing 910.

The casing 910 is a flat rectangular parallelepiped metal box that is locked onto the high potential-side battery block 100a and the low potential-side battery block 100b via locking means such as bolts or screws. Thus, the high potential-side battery block 100a and the low potential-side battery block 100b are connected and fixed at their ends along the crosswise direction via the control device 900. Namely, the control device 900 also functions as a support member to further improve the strength of the battery module 100 in the embodiment.

Electronic circuit components constituting the cell controller 200 and electronic circuit components constituting the battery controller 300 are mounted at the circuit board 920. The electronic circuit components constituting the cell controller 200 include eight integrated circuits (ICs) 210 to 218 electrically connected to the corresponding lithium ion electricity storage elements 140. The electronic circuit components constituting the battery controller 300 include a single microcomputer 310.

The cell controller 200 also includes a plurality of circuit elements such as a plurality of resistors 220, a photocoupler unit 230 and a photocoupler unit 240.

The state of charge at a lithium ion electricity storage element 140 is adjusted via a resistor 220, which is a consumption circuit element that consumes the current released from the lithium ion electricity storage element 140 by converting it to heat. Four such resisters (R1 to R4) are installed in correspondence to each of the integrated circuits 210 to 218.

The photocoupler unit 230 is an interface circuit installed in the signal transmission path extending between the integrated circuit 210 located at the leading end among the integrated circuits 210 to 218 and the microcomputer 310, and includes photocouplers 231 and 232, which are optically insulated elements used to exchange signals at varying potential levels. The photocoupler unit 240 is an interface circuit installed in the signal transmission path extending between the integrated circuit 218 located at the trailing end among the integrated circuits 210 to 218 and the microcomputer 310, and includes photocouplers 241 and 242, which are optically insulated elements used to exchange signals at varying potential levels.

In the embodiment, a plurality of connectors are disposed at one of the side surfaces of the casing 910, i.e., at the side surface facing the side where the cooling medium flows in. The plurality of connectors includes a voltage detection connector 912 and a temperature detection connector 913. The connectors (not shown) at the connection lines 800 electrically connected to the thirty two lithium ion electricity storage elements 140 are connected to the voltage detection connector 912. The connectors (not shown) at the signal lines extending from a plurality of temperature sensors 940 installed in the battery module 100 are connected to the temperature detection connector 913.

A connector 911 used to establish an external connection is disposed at another side surface of the casing 910, i.e., the side surface facing toward the side on which the cooling medium flows out in the embodiment. Connectors (not shown) at the power line through which the drive power is supplied to the battery controller 300, the signal line through which the ignition key switch on/off signal is input, the communication lines enabling communication with the vehicle controller 30 and the motor controller 23 and the like are connected to the connector 911 for external connection.

The plurality of lithium ion electricity storage elements 140 are divided into a plurality of groups each corresponding to one of the integrated circuits 210 to 218. In the embodiment, the thirty two lithium ion electricity storage elements 140, made up with the sixteen lithium ion electricity storage elements 140 constituting the battery assembly 120 in the high potential-side battery block 100 and the sixteen lithium ion electricity storage elements 140 constituting the battery assembly 120 in the low potential-side battery block 100, are divided into eight groups. More specifically, the thirty two lithium ion electricity storage elements 140 electrically connected in series are sequentially assigned to the eight groups, each made up with four lithium ion electricity storage elements starting with the lithium ion electricity storage element having the highest-order potential, in the order matching the order with which the thirty two lithium ion electricity storage elements are connected. Namely, the thirty two lithium ion electricity storage elements 140 are sequentially designated to; a first group made up with the lithium ion electricity storage element 140 with the first-order potential through the lithium ion electricity storage element 140 with the fourth-order potential that are electrically connected in series, a second group made up with the lithium ion electricity storage element 140 with the fifth-order potential through the lithium ion electricity storage element 140 with the eighth-order potential that are electrically connected in series,..., a seventh group made up with the lithium ion electricity storage element 140 with the 25th-order potential through the lithium ion electricity storage element 140 with the 28th-order potential, and an eighth group made up with the lithium ion electricity storage element 140 with the 29th-order potential through the lithium ion electricity storage element 140 with the 32nd-order potential.

It is to be noted that while the plurality of lithium ion electricity storage elements 140 in each of the two battery block are divided into four groups in the embodiment described above, the thirty two lithium Ion electricity storage elements 140 may instead be divided into six groups. In such a case, the thirty two lithium ion electricity storage elements 140 electrically connected in series may be designated to; a first group made up with, for instance, four lithium ion electricity storage elements 140 with the highest-order potential, a second group through a fifth group each made up with six lithium ion electricity storage elements 140 with intermediate-order potentials and a sixth group made up with four lithium ion electricity storage elements 140 with the lowest-order potentials.

The positive-pole sides and the negative-pole sides of the four lithium ion electricity storage elements 140 (BC 1 to BC 4) constituting the first group are electrically connected to the integrated circuit 210 via the connection lines 800 and a board wiring 921. Thus, analog signals generated based upon the terminal voltages at the four lithium ion electricity storage elements 140 constituting the first group are taken into the integrated circuit 210 via the connection lines 800 and the board wiring 921. The integrated circuit 210 is equipped with an analog/digital converter that sequentially converts the analog signals taken in to digital signals and the terminal voltages at the four lithium ion electricity storage elements 140 constituting the first group are thus detected. The integrated circuits 211 to 218 are similar to the integrated circuit 210 in that the positive-pole sides and the negative-pole sides of the four lithium ion electricity storage elements 140 constituting each group are electrically connected to the corresponding integrated circuit via the connection lines 800 and the board wiring 921 and that the terminal voltages at the four lithium ion electricity storage elements 140 constituting the group are taken into the integrated circuit and detected.

Between the positive-pole side and the negative-pole side (between the terminals) of any two successive lithium ion electricity storage elements among the four lithium ion electricity storage elements constituting the first group, a bypass serial circuit formed by electrically connecting in series a resistor 220 (R1, R2, R3 or R4) and a semiconductor switching element built into the integrated circuit 210, is disposed. The bypass serial circuits are connected via the connection lines 800 and the board wiring 921 in an electrically parallel configuration. The other groups are similar to the first group in that bypass serial circuits are connected in an electrically parallel configuration between the positive-pole sides and the negative-pole sides of the lithium ion electricity storage elements 140.

Based upon a charge state adjust command output from the battery controller 300, the integrated circuit 210 sets the individual semiconductor switching elements in a state of continuity over a predetermined length of time, so as to electrically connect in parallel the individual bypass serial circuits between the positive-pole sides and the negative-pole sides of the four lithium ion electricity storage elements 140 constituting the first group. As a result, each lithium ion electricity storage element 140 with the corresponding bypass serial circuit electrically connected in parallel is discharged and its SOC (state of charge) is thus adjusted. As does the integrated circuit 210, the integrated circuits 211 to 218 each individually control the electrical continuity for the semiconductor switching elements in the bypass serial circuits electrically connected in parallel to the four lithium ion electricity storage elements 140 constituting the corresponding group so as to individually adjust the states of charge SOC at the four lithium ion electricity storage elements 140 constituting the particular group.

By individually adjusting the states of charge SOC of the four lithium ion electricity storage elements 140 constituting each group through individual control of the states of continuity of the semiconductor switching elements in the bypass serial circuits electrically connected in parallel to the four lithium ion electricity storage elements 140 via the corresponding integrated circuit among the integrated circuits 210 to 218 as described above, uniformity can be achieved with regard to the states of charge SOC at the lithium ion electricity storage elements 140 in all the groups and an overcharge, for instance, of any lithium ion electricity storage elements 140 can be prevented.

The integrated circuits 210 to 218 each detect any error state relating to the four lithium ion electricity storage elements 140 in the corresponding group. Such an error state may indicate an overcharge or an over-discharge. An overcharge or an over-discharge is detected by each of the integrated circuits 210 to 218 by comparing the terminal voltage values detected for the four lithium ion electricity storage elements constituting the corresponding group with an overcharge threshold value and an over-discharge threshold value. An overcharge is detected if a detected terminal voltage value exceeds the overcharge threshold value, whereas an over-discharge is detected if a detected terminal voltage value is less than the over-discharge threshold value. In addition, the integrated circuits 210 to 218 each execute self diagnosis for any fault occurring in the internal circuit, e.g., a self diagnosis for an error in a semiconductor switching element used for SOC adjustment, an abnormal temperature or the like.

The integrated circuits 210 to 218 are constituted with identical internal circuits so as to fulfill the same functions as those described above, i.e., terminal voltage detection for the four lithium ion electricity storage elements 140 (BC1 to BC4) constituting the corresponding group, SOC adjustment, error state detection and self diagnosis for errors occurring in the subj ect internal circuit.

A plurality of terminals to be electrically connected with the battery module 100 are disposed on one side of each of the integrated circuits 210 to 218. The plurality of terminals include a power source terminal (Vcc), voltage terminals (V1 to V4, GND) and bypass terminals (B1 to B4). The board wiring 921 that is electrically connected to the connection line 800 are also electrically connected to the voltage terminals (V1 to V4, GND). The semiconductor switching element side of each resistor 220 is electrically connected via a board wiring 921 to one of the bypass terminals (B 1 to B4). The resistors 220 are connected, on the side opposite from the semiconductor switching element side, to the board wiring 921, electrically connected to the voltage terminals via the board wiring 921. The power source terminal (Vcc) is electrically connected to the board wiring 921 electrically connected to the voltage terminal V1 (the voltage terminal electrically connected to the positive pole-side of the lithium ion electricity storage element 140 on the highest potential side).

The voltage terminals (V1 to V4, GND) and the bypass terminals (B1 to B4) are disposed in an alternating pattern in the order matching the order in which the lithium ion electricity storage elements 140 with varying potentials are electrically connected. As a result, a circuit electrically connecting each of the integrated circuits 210 to 218 with the corresponding connection lines 800 can be formed with ease.

The negative pole-side of the lithium ion electricity storage element BC4 having the lowest potential among the four lithium ion electricity storage elements 140 constituting the corresponding group is electrically connected to the voltage terminal GND. Thus, the integrated circuits 210 to 218 are each able to operate by using the lowest potential in the corresponding group as a reference potential. Provided that the individual integrated circuits 210 to 218 operate based upon varying reference potentials, as in this case, the variance among the voltages applied from the battery module 100 to the various integrated circuits 210 to 218 can be reduced, which, in turn, reduces the level of voltage withstanding performance required of the integrated circuits 210 to 218 and assures further improvements in safety and reliability.

The positive pole-side of the lithium ion electricity storage element BC1 having the highest potential among the four lithium ion electricity storage elements 140 constituting the corresponding group is electrically connected to the power source terminal Vcc. Thus, the integrated circuits 210 to 218 each generates a voltage (e.g., 5v) to be used to run the internal circuit based upon the voltage at the highest potential in the corresponding group. By generating the operating voltage used to run the internal circuit in each of the integrated circuits 210 to 218 based upon the voltage at the highest potential in the corresponding group as described above, uniformity can be achieved with regard to the power consumed at the four lithium ion electricity storage elements 140 constituting the group and ultimately, the required level of uniformity with respect to the states of charge SOC at the four lithium ion electricity storage elements 140 constituting the corresponding group can be sustained.

A plurality of communication terminals are disposed on the other side (the side facing opposite the side where the voltage terminals are disposed) at each of the integrated circuits 210 to 218. The plurality of terminals include communication command signal transmission/reception terminals (TX and RX) through which communication command signals are transmitted/received and fault signal transmission/reception terminals (FFO and FFI) through which fault signals or fault test signals are transmitted/received.

The communication command signal transmission/reception terminals (TX and RX) at the integrated circuits 210 to 218 are electrically connected in series in an non-insulated state in the order matching the potential levels of the corresponding groups. Namely, the communication command signal transmission terminal (TX) at the integrated circuit 210 (the integrated circuit with the higher-order potential) and the communication command signal reception terminal (RX) at the integrated circuit 211 (the integrated circuit with a lower-order potential, the potential of which is directly under the potential level at the integrated circuit with the higher-order potential) are electrically connected in series in the non-insulated state, the communication command signal transmission terminal (TX) at the integrated circuit 211 and the communication command signal reception terminal (RX) at the integrated circuit 212 are electrically connected in series in the non-insulated state,..., the communication command signal transmission terminal (TX) at the integrated circuit 217 and the communication command signal reception terminal (RX) at the integrated circuit 218 are electrically connected in series in the non-insulated state, so as to connect the communication command signal transmission terminals (TX) and the communication command signal reception terminals (RX) in a serial electrical connection in the non-insulated state. This form of connection is referred to as a daisy-chain connection in the description of the embodiment.

The fault signal transmission/reception terminals (FFO and FFI) at the integrated circuits 210 to 218, too, are connected in a connection pattern similar to that with which the communication command signal transmission/reception terminals (TX and RX) are connected. In other words, they are electrically connected in series in the non-insulated state in the order matching the levels of the potentials assumed at the corresponding groups. Namely, the fault signal transmission terminal (FFO) at the integrated circuit with the higher-order potential and the fault signal reception terminal (FFI) at the integrated circuit with a lower-order potential, the potential level of which is directly under that assumed at the integrated circuit with the higher-order potential, are electrically connected in series in the non-insulated state.

The light receiving side of the photocoupler 231 (PH 1) is electrically connected to the communication command signal reception terminal (RX) of the integrated circuit 210 corresponding to the group of lithium ion electricity storage elements 140 with the highest potential. A communication command signal transmission terminal (TX) at the microcomputer 310 is electrically connected to the light-emitting side of the photocoupler 231. In addition, the light-emitting side of the photocoupler 241 (PH 3) is electrically connected to the communication command signal transmission terminal (TX) of the integrated circuit 218 corresponding to the group of lithium ion electricity storage elements 140 with the lowest potential. A communication command signal reception terminal (RX) at the microcomputer 310 is electrically connected to the light receiving side of the photocoupler 241. Through these connections, a communication command signal loop transmission path 250, electrically insulated from the cell controller 200 and the battery controller 310, which extends from the microcomputer 310, through the photocoupler 231, the integrated circuit 210,... the integrated circuit 218 and the photocoupler 241 in this order, to return to the microcomputer 310, is formed between the cell controller 200 and the battery controller 310. The loop transmission path 250 is a serial transmission path.

A communication command signal output from the microcomputer 310 is transmitted through the communication command signal loop transmission path 250. The communication command signal, which is made up with a plurality of bytes of data with a plurality of areas, such as data areas indicating communication (control) details defined therein, is transmitted in a loop in the transmission sequence described above.

The communication command signal output from the microcomputer 310 to the integrated circuits 210 to 218 via the communication command signal loop transmission path 250 may be a request signal requesting information indicating the terminal voltages detected at the lithium ion electricity storage elements 140, a command signal issued as an instruction for adjusting the states of charge at the lithium ion electricity storage elements 140, a startup signal for individually setting the integrated circuits 210 to 218 in a sleep state to a wake-up state, i.e., for individually starting up the integrated circuits, a stop signal for individually setting the integrated circuits 210 to 218 in the wake-up state to the sleep state, i.e., for stopping the operation of the integrated circuits, an address setting signal issued when setting communication addresses in correspondence to the integrated circuits 210 to 218 or an error verification signal issued to verify an error state detected in the integrated circuits 210 to 218.

It is to be noted that while an explanation is given in reference to the embodiment on an example in which a communication command signal is transmitted by passing it on from the integrated circuit 210 toward the integrated circuit 218, the communication command signal may instead be transmitted by passing it on from the integrated circuit 218 toward the integrated circuit 210.

In addition, the light receiving side of the photocoupler 232 (PH 2) is electrically connected to the fault signal reception terminal (FFI) of the integrated circuit 210 corresponding to the group of lithium ion electricity storage elements 140 with the highest potential. The fault test signal transmission terminal (FFTEST) at the microcomputer 310 is electrically connected to the light-emitting side of the photocoupler 232. In addition, the light-emitting side of the photocoupler 242 (PH 4) is electrically connected to the fault signal transmission terminal (FFO) of the integrated circuit 218 corresponding to the group of lithium ion electricity storage elements 140 with the lowest potential. A fault signal reception terminal (FF) at the microcomputer 310 is electrically connected to the light receiving side of the photocoupler 242. Through these connections, a fault signal loop transmission path 260, electrically insulated from the cell controller 200 and the battery controller 300, which extends from the microcomputer 310, through the photocoupler 232, the integrated circuit 210,... the integrated circuit 218 and the photocoupler 242 in this order, to return to the microcomputer 310, is formed between the cell controller 200 and the battery controller 300. The loop transmission path 260 is a serial transmission path.

A fault test signal output from the microcomputer 310 is transmitted through the fault signal loop transmission path 260. The fault test signal, which is a one-bit Hi level signal transmitted in order to detect an error at the integrated circuits 210 to 218, a disconnection of a communication circuit or the like, is transmitted in the transmission sequence described earlier. In the event of an error, the fault test signal returns to the microcomputer 310 as a signal indicating Low level. The microcomputer 310 is thus able to detect an error having occurred at any of the integrated circuits 210 through 218, an error at the integrated circuits 210 to 218, a disconnection of a communication circuit or the like. In addition, if an error is detected at any of the integrated circuits 210 through 218, a signal indicating an error is output from the integrated circuit where the error has been detected, e.g., the integrated circuit 212, to the fault signal loop transmission path 260. The fault signal is a one-bit signal and is passed on through; integrated circuit 213 → ...→ integrated circuit 218 → photocoupler 242 in this order and is delivered to the microcomputer 310. As a result, the integrated circuit with the detected error is able to report the error to the microcomputer 310 promptly.

It is to be noted that while an explanation is given in reference to the embodiment on an example in which the fault test signal is transmitted by passing it on from the integrated circuit 210 toward the integrated circuit 218, the fault test signal may instead be transmitted by passing it on from the integrated circuit 218 toward the integrated circuit 210. In addition, while the embodiment is described by assuming that the fault signal generated at the integrated circuit with the detected error is transmitted toward the integrated circuit with the lower-order potential relative to the integrated circuit where the error has occurred, the fault signal may instead be transmitted from the integrated circuit with the detected error toward the integrated circuit with the higher-order potential relative to the integrated circuit where the error has occurred.

The photocouplers 231, 232, 241 and 242 (PH 1 to PH 4) electrically insulate the communication command signal loop transmission path 250 and the fault signal loop transmission path 260 located between the cell controller 200 and the battery controller 300. In addition, signals exchanged between the cell controller 200 and the battery controller 300 are converted to light and transmitted via the photocouplers. As described earlier, there are significant differences between the source potentials at the cell controller 200 and the battery controller 300 and between the source voltages at the cell controller 200 and the battery controller 300. For this reason, signals to be exchanged between the cell controller 200 and the battery controller 300 through electrical connection must undergo potential conversion and voltage conversion, which, in turn, will require a large-scale, expensive interface circuit for the cell controller 200 and the battery controller 300 and makes it difficult to provide a compact and low-cost controller. Accordingly, the communication between the cell controller 200 and battery controller 300 is achieved via the photocouplers 231, 232, 241 and 242 (PH 1 to PH 4) in the embodiment so as to provide a compact, low-cost controller.

In addition, varying source potentials are also assumed at the individual integrated circuits 210 through 218 as described earlier. However, the integrated circuits 210 to 218 in the embodiment are electrically connected in series, i.e., in a daisy-chain, in a sequence set in accordance with the levels of potentials at the corresponding groups in the battery assembly 120. Thus, the signal transmission among the individual integrated circuits 210 to 218 can be achieved with ease through potential conversion (level shift). The integrated circuits 210 to 218 are each equipped with a potential conversion (level shift) circuit disposed on the signal reception side. Accordingly, the signal transmission among the integrated circuits 210 to 218 can be achieved in the embodiment without having to install photocouplers, which are more expensive than other types of circuit elements, and thus, a more compact, lower cost controller can be provided.

The microcomputer 310 transmits to the cell controller 200 the communication command signal mentioned earlier, generated based upon input information obtained from various signals input thereto or based upon information indicating the results of arithmetic operation executed based upon the input information. The microcomputer also outputs a signal to a higher-order controller (the motor controller 23 or the vehicle controller 30).

The various types of signals input to the microcomputer 310 include terminal voltage signals indicating the terminal voltages at the various lithium ion electricity storage elements 140, individually output from the integrated circuits 210 to 218, a fault signal output from an integrated circuit with a detected error among the integrated circuits 210 through 218, a current sensor signal output from the current sensor 430 used to detect a charge/discharge current at the battery module 100, a voltage sensor signal output from a voltage sensor 930, used to detect the overall voltage at the battery module 100, a temperature sensor signal output from a temperature sensor (e.g., a thermistor element) installed inside the battery module 100 to detect the temperature of the battery assembly 120, an on/off signal generated in response to an ignition key switch operation and a signal output from the higher-order controller (the motor controller 23 or the vehicle controller 30).

The various types of signals output from the microcomputer 310 include the communication command signal mentioned earlier, signals providing information indicating the allowable charge/discharge power, the state of charge SOC, the state of health SOH (state of health) and the like determined through arithmetic operation executed based upon the information indicating the conditions at the battery module 100 (e.g., the voltage, the current, the temperature and the like) and signals providing error status information (indicating, for instance, an overcharge, an over-discharge, an excessively high temperature and the like), obtained by executing arithmetic operation based upon the information indicating the conditions at the battery module 100 (e.g., the voltage, the current and the temperature) or obtained based upon the error information.

Among these output signals, the signals corresponding to the information indicating the charge/discharge threshold power, the state of charge SOC, the state of health SOH and the like and the signals corresponding to the error status information (indicating, for instance, an overcharge, an over-discharge and an excessively high temperature) are output to the higher-order controller (the motor controller 23 or the vehicle controller 30).

### Embodiment 2

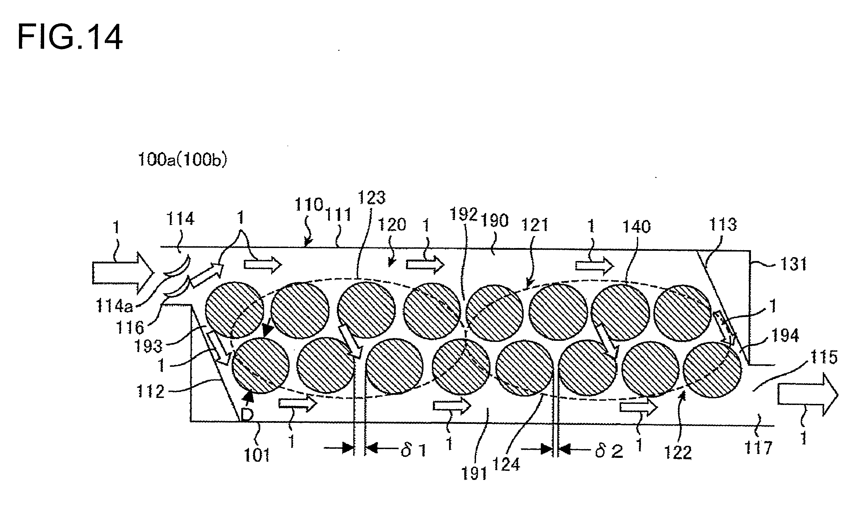

In reference to FIG. 14, the second embodiment of the present invention is described.

In the second embodiment, achieved by revising the first embodiment, the quantity of the low-temperature/high-speed cooling medium 1, which directly impacts the lithium ion electricity storage element 140 located closest to the cooling medium intake port 114 (the lithium ion electricity storage element 140 in the first electricity storage element row 121 disposed at the end closest to the cooling medium intake port 114) is reduced. Other structural features of the embodiment are identical to those of the first embodiment. Accordingly, the same reference numerals are assigned to components identical to those of the first embodiment so as to preclude the necessity for a repeated explanation thereof.

The reduction in the quantity of the cooling medium is achieved in the embodiment via guide blades 114a disposed in the cooling medium intake duct 116. The guide blades 114a are a plurality of blade members, each extending in the cooling medium intake duct 116 from the side facing opposite the side where the cooling medium intake port 114 is present toward the cooling medium intake port 114 along the lengthwise direction while curving toward the intake flow passage forming plate 111 along the height-wise direction and also extending inside the cooling medium intake duct 116 along the crosswise direction with a crescent- or a bow-shaped section. The blade members are set side-by-side along the height-wise direction. The plurality of blade members are held at a frame fitted in the cooling medium intake duct 116.

Most of the cooling medium 1, having been drawn into the cooling medium intake duct 116, flows along the lengthwise direction toward the cooling medium intake port 114 and is drawn into the module case 110 through the cooling medium intake port 114 via the guide blades 114a acting as a regulator that forcefully regulates its flow along the height-wise direction toward the intake flow passage forming plate 111. As a result, the quantity of the low-temperature/high-speed cooling medium 1 that directly impacts the lithium ion electricity storage element 140 taking up the position closest to the cooling medium intake port 114 is reduced. The cooling medium 1, the flow of which is forcibly regulated via the guide blades 114a flows through the intake-side flow passage 190 as a primary flow.

The rest of the cooling medium 1, i.e., the cooling medium 1 drawn into the module case 110 along the lengthwise direction from the cooling medium intake port 114 without its flow regulated via the guide plate 114a, impacts the lithium ion electricity storage element 140 present at the position closest to the cooling medium intake port 114, thereby cooling the particular lithium ion electricity storage element 140. The cooling medium 1 is then divided into two flows at the lithium ion electricity storage element 140. The cooling medium 1 in one of the divided flows joins the primary flow traveling through the intake flow passage 190. The other distributive flow forms a secondary flow traveling through the intake-side guide passage 193.

Following this, the cooling medium 1 flows as has been described in reference to the first embodiment.

In the embodiment described above, the lithium ion electricity storage element 140 located at the position closest to the cooling medium intake port 114, which is bound to be cooled with the coldest cooling medium 1 with the highest velocity, is not cooled to an excessive extent and thus, the temperature differences among the lithium ion electricity storage elements 140, manifested by the lithium ion electricity storage elements 140 located on the upstream side in the flow path of the cooling medium 1 and the lithium ion electricity storage elements 140 present on the downstream side in the flow path of the cooling medium 1, can be reduced over the first embodiment. As a result, a further improvement in the cooling performance over the first embodiment is achieved and a lithium ion battery device 1000 assuring more advanced performance over the first embodiment is provided through the embodiment.

### Embodiment 3

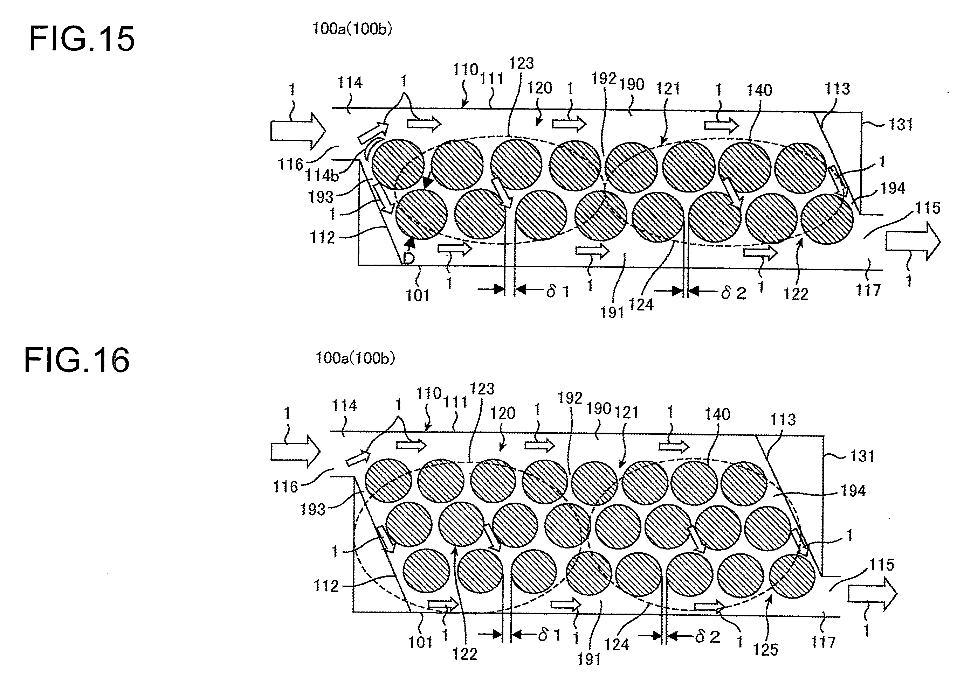

The third embodiment of the present invention is now described in reference to FIG. 15.

In the third embodiment, also achieved by revising the first embodiment, the quantity of the low-temperature/high-speed cooling medium 1, which directly impacts the lithium ion electricity storage element 140 located closest to the cooling medium intake port 114 (the lithium ion electricity storage element 140 in the first electricity storage element row 121 disposed at the end closest to the cooling medium intake port 114) is reduced, as is the second embodiment. Other structural features of the embodiment are identical to those of the first embodiment. Accordingly, the same reference numerals are assigned to components identical to those of the first embodiment so as to preclude the necessity for a repeated explanation thereof.

A reduction in the quantity of cooling medium is achieved in the embodiment by disposing an adiabatic plate 114b between the outer circumferential surface of the lithium ion electricity storage element 140 located closest to the cooling medium intake port 114, which faces opposite the cooling medium intake port 114, and the cooling medium intake port 114. The adiabatic plate 114b is a blade member curving along the contour of the outer circumference of the lithium ion electricity storage element 140 located closest to the cooling medium intake port 114 (curving so as to range toward the intake flow passage forming plate 111 along the height-wise direction and also range toward the cooling medium outlet port 115 along the lengthwise direction). The adiabatic plate 114b also extends along the crosswise direction as if to shield the outer circumferential surface facing opposite the cooling medium intake port 114. The blade member constituting the adiabatic plate 114 is held between the side plates 130 and 131 and has either a crescent-shaped section or a bow-shaped section. In addition, the adiabatic plate 114b shares the flow dividing function also fulfilled by the lithium ion electricity storage element 140 taking up the position closest to the cooling medium intake port 114.

The cooling medium 1 drawn into the casing 110 along the lengthwise direction through the cooling medium intake port 114 impacts the adiabatic plate 114b. As a result, the quantity of low-temperature/high-speed cooling medium 1 that directly impacts the lithium ion electricity storage element 140 located closest to the cooling medium intake port 114 becomes reduced. Subsequently, the initial flow of the cooling medium 1 is divided into a primary flow to travel through the intake-side flow passage 190 and a secondary flow to travel through the intake-side guide passage 193 at a flow rate lower than that of the primary flow.

Following this, the cooling medium 1 flows as has been described in reference to the first embodiment.

The embodiment described above is similar to the second embodiment in that the lithium ion electricity storage element 140 located at the position closest to the cooling medium intake port 114, which is bound to be cooled with the coldest cooling medium 1 with the highest velocity, is not cooled to an excessive extent and thus, the temperature differences among the lithium ion electricity storage elements 140, manifested by the lithium ion electricity storage elements 140 located on the upstream side in the flow path of the cooling medium 1 and the lithium ion electricity storage elements 140 present on the downstream side in the flow path of the cooling medium 1, can be reduced over the first embodiment. As a result, a further improvement in the cooling performance over the first embodiment is achieved and a lithium ion battery device 1000 assuring more advanced performance over the first embodiment is provided through the embodiment.

### Embodiment 4

In reference to FIG. 16, the fourth embodiment of the present invention is described.

A battery assembly 120 in the fourth embodiment, which is a variation of the first embodiment, includes an additional electricity storage element row and thus is made up with first through third battery rows 121, 122 and 125 set over three stages (three layers). In other words, the battery assembly 120 includes twenty four lithium ion electricity storage elements 140.

The first electricity storage element row 121 is set further toward the intake flow passage forming plate 111 relative to the second electricity storage element row 122, with an offset toward the cooling medium intake port 114 relative to the second electricity storage element row 122. The third electricity storage element row 125 is set further toward the outlet flow passage forming plate (module base 101) relative to the second electricity storage element row 122, with an offset toward the cooling medium outlet port 115 relative to the second electricity storage element row 122. In the embodiment, the first through third electricity storage element rows 121, 122 and 125 are disposed with an offset along the lengthwise direction so that the position taken along the lengthwise direction by the central axis of the lithium ion electricity storage element 140 in the second electricity storage element row 122, which is located closest to the cooling medium outlet port 115, is at a halfway point between the central axes of the lithium ion electricity storage elements 140 in the third electricity storage element row 125, one located closest to the cooling medium outlet port 115 and the other disposed adjacent to the lithium ion electricity storage element 140 closest to the cooling medium outlet port 115 and so that the position taken along the lengthwise direction by the central axis of the lithium ion electricity storage element 140 in the first electricity storage element row 121, which is located closest to the cooling medium outlet port 115, is at a halfway point between the central axes of lithium ion electricity storage elements 140 in the second electricity storage element row 122, one located closest to the cooling medium outlet port 115 and the other disposed adj acent to the lithium ion electricity storage element 140 located closest to the cooling medium outlet port 115.

An outlet-side flow passage 191 is formed with a clearance between the outlet flow passage forming plate (module base 101) and the third electricity storage element row 125. Electricity storage element-to-electricity storage element flow passages 192 are formed with specific clearances present between the first electricity storage element row 121 and the second electricity storage element row 122, between the second electricity storage element row 122 and the third electricity storage element row 125 and between the lithium ion electricity storage elements 140 in the first through third electricity storage element rows 121, 122 and 125, which are set side-by-side along the lengthwise direction. An intake-side guide passage 193 is formed with a clearance present between the lithium ion electricity storage elements 140 in the first, second and third electricity storage element rows 121, 122 and 125, taking up positions closest to the cooling medium intake port 114, and the intake-side guide plate 112. An outlet-side guide passage 194 is formed with a clearance present between the lithium ion electricity storage elements 140 in the first, second and third electricity storage element rows 121, 122 and 125, taking up positions closest to the cooling medium outlet port 115 and the outlet-side guide plate 113.

The cooling medium outlet port 115 is formed on a line extending along the lengthwise direction from the third electricity storage element row 125 and the outlet-side flow passage 191. The position assumed by the central axis of the cooling medium outlet port 115 along the height-wise direction is lower than that assumed by the central axis of the lithium ion electricity storage element 140 in the third electricity storage element row 125 taking up the position closest to the cooling medium outlet port 115 but is higher than the position assumed by the lithium ion electricity storage elements 140 in the third electricity storage element row 125 at their portions closest to the outlet-side flow passage 191 (toward the outlet flow passage forming plate (module base 101)).

In the embodiment described above, the first, second and third electricity storage element rows 121, 122 and 125 are disposed with an offset along the lengthwise direction so as to minimize the dimension of the battery assembly 120 measured along the height-wise direction and consequently, reduce the dimension of the high potential-side battery block 110a measured along the height-wise direction.

As in the first embodiment, the battery assembly 120 achieved in the embodiment includes two separate functional groups, i.e., a first battery assembly group 123 located on the cooling medium upstream side and a second battery assembly group 124 located on the cooling medium downstream side. Namely, the battery assembly 120 includes the first battery assembly group 123 constituted with an aggregate of twelve lithium ion electricity storage elements 140, made up with lithium ion electricity storage elements 140 in the first electricity storage element row 121 taking up four successive positions starting at the end position on the side where the cooling medium intake port 114 is present and moving toward the cooling medium outlet port 115, lithium ion electricity storage elements 140 in the second electricity storage element row 122 taking up four successive positions starting at the end position on the side where the cooling medium intake port 114 is present and moving toward the cooling medium outlet port 115 and lithium ion electricity storage elements 140 in the third electricity storage element row 125 taking up four successive positions starting at the end position on the side where the cooling medium intake port 114 is present and moving toward the cooling medium outlet port 115. The second battery assembly group 124 in the battery assembly 120 is constituted with an aggregate of twelve lithium ion electricity storage elements 140, made up with lithium ion electricity storage elements 140 in the first electricity storage element row 121 taking up four successive positions starting at the end position on the side where the cooling medium outlet port 115 is present and moving toward the cooling medium intake port 114, lithium ion electricity storage elements 140 in the second electricity storage element row 122 taking up four successive positions starting at the end position on the side where the cooling medium outlet port 115 is present and moving toward the cooling medium intake port 114 and lithium ion electricity storage elements 140 in the third electricity storage element row 122 taking up four successive positions starting at the end position on the side where the cooling medium outlet port 115 is present and moving toward the cooling medium intake port 114.

A clearance δ1 formed between any two lithium ion electricity storage elements 141 set side-by-side along the lengthwise direction in the first electricity storage element row 121, the second electricity storage element row 122 or the third electricity storage element row 125 belonging to the first battery assembly group 123 (the shortest distance between the two lithium ion electricity storage elements 140 along the lengthwise direction) is set larger than a clearance δ2 formed between any two lithium ion electricity storage elements 141 set side-by-side along the lengthwise direction in the first electricity storage element row 121, the second electricity storage element row 122 or the third electricity storage element row 125 belonging to the second battery assembly group 124 (the shortest distance between the two lithium ion electricity storage elements 140 along the lengthwise direction). The clearance between the lithium ion electricity storage element 140 in the first battery assembly group 123 assuming the position closest to the cooling medium outlet port 115 and the lithium ion electricity storage element 140 in the second battery assembly group 124 assuming a position closest to the cooling medium intake port 114 (the shortest distance between the two lithium ion electricity storage elements along the lengthwise direction) is set to match the clearance δ2.

In the embodiment, the lithium ion electricity storage elements 140 in one group in the battery assembly 120 are set side-by-side along the lengthwise direction with a clearance different from the clearance with which the lithium ion electricity storage elements 140 are set side-by-side along the lengthwise direction in the other group, as described above. Namely, the clearance between any two lithium ion electricity storage elements 140 set side-by-side along the lengthwise direction in the group located on the side where the cooling medium intake port 114 is present is set larger than the clearance formed between the lithium ion electricity storage elements 140 set side-by-side along the lengthwise direction in the group located on the side where the cooling medium outlet port 115 is present. As a result, the extent of temperature increase at the plurality of lithium ion electricity storage elements 140 can be more effectively kept down and a more even increase in the temperature can be assured for the plurality of lithium ion electricity storage elements 140, thereby achieving better cooling performance with which the lithium ion electricity storage elements 140 are cooled, as in the first embodiment described earlier.

Other structural features are identical to those of the first embodiment. For this reason, the same reference numerals are assigned to components identical to those of the first embodiment so as to preclude the necessity for a repeated explanation thereof.

Through the embodiment described above, an advantage is achieved in that a larger charge storage capacity over the first embodiment is assured, in addition to advantages similar to those of the first embodiment.

By adopting the fourth embodiment in conjunction with the structure achieved in the second embodiment or the third embodiment, the advantages of the second or third embodiment will be also achieved, so as to further improve the cooling effect over the first embodiment and provide a lithium ion battery device 1000 with more advanced performance over that provided through the first embodiment.

### Embodiment 5

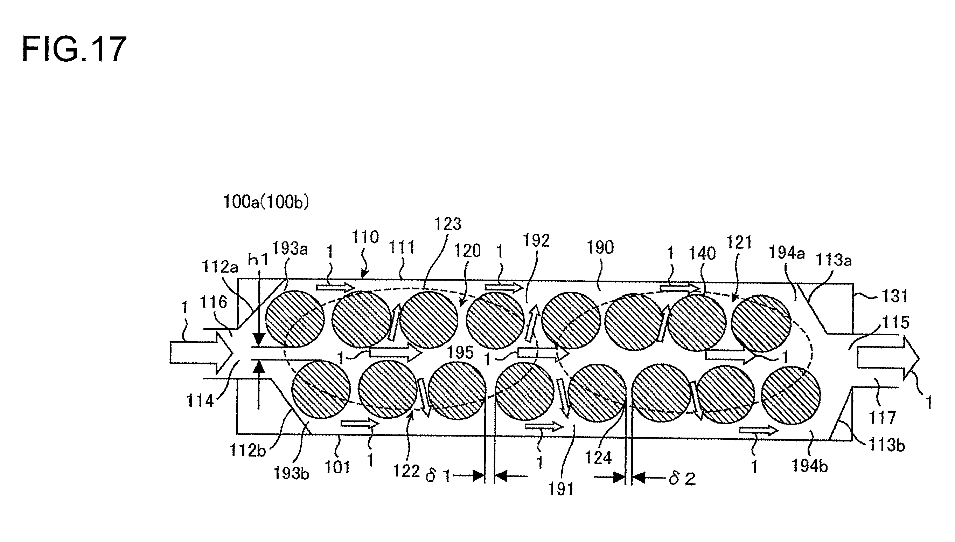

In reference to FIG. 17, the fifth embodiment of the present invention is described.

In the embodiment, achieved by revising the first embodiment, a central flow passage 195 is formed between the first electricity storage element row 121 and the second electricity storage element row 122. The central flow passage 195 functions as a third cooling medium flow passage (electricity storage element-to-electricity storage element flow passage) formed so as to extend lengthwise parallel to the intake-side flow passage 190 and the outlet-side flow passage 191 by widening the clearance between the first electricity storage element row 121 and the second electricity storage element row 122 along the height-wise direction.

A clearance h1 between the lithium ion electricity storage elements 140 in the first electricity storage element row 121 and the lithium ion electricity storage elements 140 in the second electricity storage element row 122, measured along the height-wise direction (the clearance measured from a point in a lithium ion electricity storage element 140 in one electricity storage element row to a point in a lithium ion electricity storage element 140 in the other electricity storage element row, over which the two lithium ion electricity storage elements 140 are at their closest to each other) is greater than δ1 (h1 is several times greater than δ1). Unlike in the previous embodiments, in which the intake-side flow passage 190 and the outlet-side flow passage 191 are used as primary flow passages, the central flow passage 195 is used as a primary flow passage and the intake-side flow passage 190 and the outlet-side flow passage 191 are used as sub flow passages in the embodiment.

In addition, in conjunction with the central flow passage 195 designated as the primary flow passage, the cooling medium intake port 114, the cooling medium outlet port 115, the cooling medium intake duct 116 and the cooling medium outlet duct 117 in the embodiment are formed so as to assume central positions along the height-wise direction, facing opposite the central flow passage 195, so that the central axes of the cooling medium intake port 114, the cooling medium outlet port 115, the cooling medium intake duct 116 and the cooling medium outlet duct 117 are each set coaxially to the central axis of the central flow passage 195.

Furthermore, in conjunction with the adjustment made in the embodiment with regard to the positions assumed along the height-wise direction by the cooling medium intake port 114, the cooling medium outlet port 115, the cooling medium intake duct 116 and the cooling medium outlet duct 117, the intake-side guide plate 112 and the outlet-side guide plate 113 are each split into two parts along the height-wise direction. Namely, the intake-side guide plate 112 is made up with two separate parts; a first electricity storage element row-side intake guide plate 112a and a second electricity storage element row-side intake guide plate 112b, and the outlet-side guide plate 113 is made up with two separate parts, a first electricity storage element row-side outlet guide plate 113a and a second electricity storage element row-side outlet guide plate 113b. While the second electricity storage element row-side intake guide plate 112b and the first electricity storage element-row side outlet guide plate 113a are disposed with the tilt defined in the description of the first embodiment, the first electricity storage element-row side intake guide plate 112a and the second electricity storage element-row side outlet guide plate 113b are disposed with a tilt that is the inverse of the defined in reference to the first embodiment.

Moreover, in conjunction with the intake-side guide plate 112 and the outlet-side guide plate 113 are each constituted with two separate parts, the intake-side guide passage 193 and the outlet-side guide passage 194, too, are each split into two parts along the height-wise direction in the embodiment. Namely, the intake-side guide passage 193 is divided into two flow passages; a first electricity storage element-row side intake guide passage 193a and a second electricity storage elements roadside intake guide passage 193b, and the outlet-side guide passage 194 is divided into two flow passages; a first electricity storage element-row side outlet guide passage 194a and a second electricity storage element-row side outlet guide passage 194b.

In addition, in conjunction with the intake-side guide passage 193 constituted with two separate parts, the lithium ion electricity storage elements 140 in the first electricity storage element row 121 and the second electricity storage element row 122, located at the ends of the electricity storage element rows closest to the cooling medium intake port 114, both function as a flow dividing mechanism that divides the flow of the cooling medium 1.

As does the battery assembly in the first embodiment, the battery assembly 120 achieved in the embodiment includes two separate functional groups, i.e., a first battery assembly group 123 located on the cooling medium upstream side and a second battery assembly group 124 located on the cooling medium downstream side. A clearance δ1 formed between any two lithium ion electricity storage elements 141 set side-by-side along the lengthwise direction in the first electricity storage element row 121 or the second electricity storage element row 122 belonging to the first battery assembly group 123 (the shortest distance between the two lithium ion electricity storage elements 140 along the lengthwise direction) is set larger than a clearance δ2 formed between any two lithium ion electricity storage elements 141 set side-by-side along the lengthwise direction in the first electricity storage element row 121 or the second electricity storage element row 122 belonging to the second battery assembly group 124 (the shortest distance between the two lithium ion electricity storage elements 140 along the lengthwise direction), as in the first embodiment.

Other structural features are identical to those of the first embodiment. Accordingly, the same reference numerals are assigned to components identical to those in the first embodiment so as to preclude the necessity for a repeated explanation thereof.

Next, the flow of the cooling medium 1 is described.

The cooling medium 1 having been drawn into the casing 110 from the cooling medium intake duct 116 via the cooling medium intake port 114 first contacts the lithium ion electricity storage elements 140 disposed at the positions closest to the cooling medium intake port 114 in the first electricity storage element row 121 and the second electricity storage element row 122. Consequently, the initial flow of the cooling medium 1 is divided into a primary flow to travel through the central flow passage 195 and secondary flows to travel through the first electricity storage element-row side intake guide passage 193a and the second electricity storage element-row side intake guide passage 193b at a flow rate lower than that of the primary flow.

As the cooling medium 1 in the primary flow traveling through the central flow passage 195 moves from the cooling medium intake port 114 toward the cooling medium outlet port 115, it cools the lithium ion electricity storage elements 140 in the first electricity storage element row 121 and the second electricity storage element row 122 on their sides facing toward the central flow passage 195 and is distributed into the individual electricity storage element-to-electricity storage element flow passages 192, thereby becoming a plurality of distributive flows.

The cooling medium in the secondary flow through the first electricity storage element-row side intake guide passage 193a, traveling from the cooling medium intake port 114 toward the intake-side flow passage 190, and the cooling medium in the secondary flow through the second electricity storage element-row side intake guide passage 193b, traveling from the cooling medium intake port 114 toward the outlet-side flow passage 191, follow oblique paths as they respectively cool the lithium ion electricity storage element 140 in the first electricity storage element row 121 assuming the position closest to the cooling medium intake port 114 over its area facing toward the cooling medium intake port 114 and the lithium ion electricity storage element 140 in the second electricity storage element row 122 assuming the position closest to the cooling medium intake port 114 over its area facing toward the cooling medium intake port 114, before they reach the intake-side flow passage 190 and the outlet-side flow passage 191 respectively.

The cooling medium 1 in the distributive flows cools the outer circumferential surfaces of the lithium ion electricity storage elements 140 as it moves from the central flow passage 195 toward the intake-side flow passage 190 and the outlet-side flow passage 191 through the individual electricity storage element-to-electricity storage element flow passages 192 with a relative tilt before it reaches the intake-side flow passage 190 and the outlet-side flow passage 191. The clearances forming the electricity storage element-to-electricity storage element flow passages 192 fulfill a fluid dynamic function similar to that of holes in a porous plate. In other words, the distributive flows of the cooling medium 1 can be regulated via the clearances in the electricity storage element-to-electricity storage element flow passages in the embodiment. In addition, by setting the dynamic pressure of the cooling medium 1 and the pressure loss occurring in the clearances at the electricity storage element-to-electricity storage element flow passages 192 at optimal levels, the cooling medium 1 can be distributed evenly to cool the various lithium ion electricity storage elements 140 with a uniform distributive flow rate.

The battery assembly 120 in the embodiment is divided into the first battery assembly group 123 and the second battery assembly group 124 and the clearances (electricity storage element-to-electricity storage element flow passages 192) δ1 between the lithium ion electricity storage elements 140 set next to each other along the lengthwise direction in the first battery assembly group 123 is set greater than the clearances (electricity storage element-to-electricity storage element flow passages 192) δ2 between the lithium ion electricity storage elements 140 set next to each other along the lengthwise direction in the second battery assembly cell group 124 as described above so as to allow the cooling medium 1 to flow through the electricity storage element-to-electricity storage element flow passage 192 in the first battery assembly group 123, located on the upstream side in the flow path of the cooling medium 1 where the battery temperature tends to be low, at a lower flow velocity and allow the cooling medium 1 to flow through the electricity storage element-to-electricity storage element flow passages 192 in the second battery assembly group 124, located on the downstream side in the flow path of the cooling medium 1 where the battery temperature tends to be high, at a higher flow velocity. Through these measures, the heat transfer (heat exchange) between the lithium ion electricity storage elements 140 in the first battery assembly group 123 and the cooling medium 1 is deterred and heat transfer (heat exchange) between the lithium ion electricity storage elements 140 in the second battery assembly group 124 and the cooling medium 1 is promoted. As a result, the extent of temperature increase occurring at each lithium ion electricity storage element 140 as it is charged and discharged can be reduced. At the same time, uniformity is achieved with regard to the temperature increase at the lithium ion electricity storage elements 140 disposed from the upstream side through the downstream side in the flow path of the cooling medium 1 by adopting the embodiment described above. In other words, better cooling performance over the related art is assured through the embodiment.

Through the intake-side flow passage 190, a collective flow of the cooling medium formed as the distributive flows of the cooling medium 1 having moved through the individual electricity storage element-to-electricity storage element flow passages 192 in the first electricity storage element row 121 join one after another, the secondary flow of the cooling medium 1 having moved through the first electricity storage element-row side intake guide passage 193a, cools the lithium ion electricity storage elements 140 in the first electricity storage element row 121 over the areas facing toward the intake-side flow passage 190 as it travels from the first electricity storage element-row side intake guide passage 193a toward the first electricity storage element-row side outlet guide passage 194a.

Through the outlet-side flow passage 191, a collective flow of the cooling medium 1 formed as the distributive flows of the cooling medium 1 having moved through the individual electricity storage element-to-electricity storage element flow passages 192 in the second electricity storage element row 122 join, one after another, the secondary flow of the cooling medium 1 having moved through the second electricity storage element-row side intake guide passage 193b, cools the lithium ion electricity storage elements 140 in the second electricity storage element row 122 over their areas facing toward the outlet-side flow passage 191 as it travels from the second electricity storage element-row side intake guide passage 193b toward the second electricity storage element-row side outlet guide passage 194b.

The collective flow having traveled through the intake-side flow passage 190 then moves into the first electricity storage element-row side outlet guide passage 194a. The collective flow having traveled through the outlet-side flow passage 191 then moves into the second electricity storage element-row side outlet guide passage 194b. As the collective flow having traveled through the intake-side flow passage 190 travels on in an oblique path from the intake-side flow passage 190 toward the cooling medium outlet port 115, it cools the lithium ion electricity storage element 140 in the first electricity storage element row 121 assuming the position closest to the cooling medium outlet port 115 over its area facing toward the cooling medium outlet port 115. As the collective flow having traveled through the outlet-side flow passage 191 travels on in an oblique path from the outlet-side flow passage 191 toward the cooling medium outlet port 115, it cools the lithium ion electricity storage element 140 in the second electricity storage element row 122 at the position closest to the cooling medium outlet port 115, which faces toward the cooling medium outlet port 115. The collective flows having traveled in the oblique paths and reached the cooling medium outlet port 115 are eventually drawn out to the cooling medium outlet duct 117 through the cooling medium outlet port 115, together with the primary flow of the cooling medium having traveled through the central flow passage 195.

Advantages similar to those of the first embodiment are achieved through the embodiment described above.

The embodiment achieves an added advantage in that since the primary flow of the cooling medium 1 travels on a parallel flow path instead of the oblique flow path formed in the first embodiment, disruption in the flow of the cooling medium 1, which tends to occur readily at the lithium ion electricity storage elements 140 located closer to the cooling medium outlet port 115, is deterred and thus, the overall pressure loss occurring in the battery module 110 can be reduced. As a result, a better cooling effect over that in the first embodiment is achieved through the embodiment, which, in turn, makes it possible to provide a lithium ion battery device 1000 with more advanced performance over that achieved in the first embodiment.

### Embodiment 6

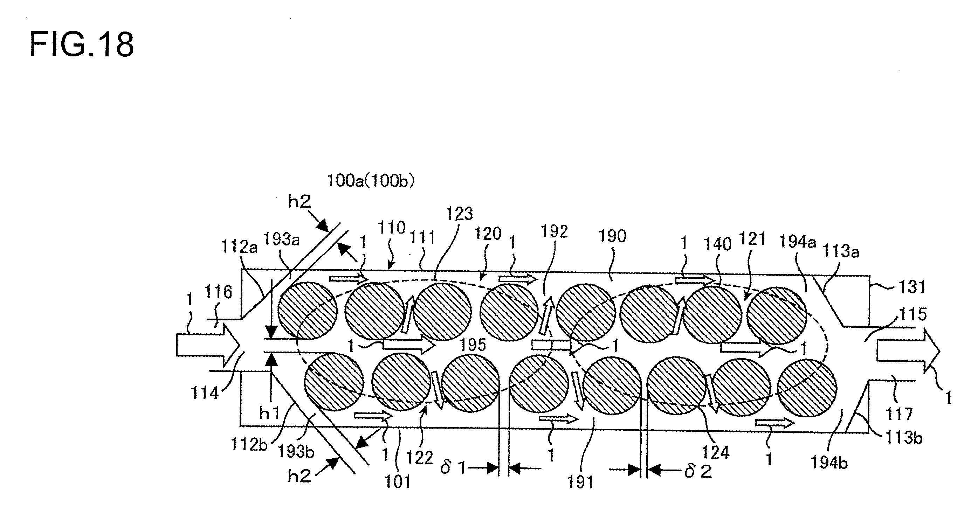

The sixth embodiment of the present invention is described in reference to FIG. 18.

In this embodiment, achieved by revising the fifth embodiment, h1 representing the dimension of the clearance constituting the central flow passage 195 measured along the height-wise direction (the smallest distance between the lithium ion electricity storage elements 140 in the two electricity storage element rows) and h2 representing the dimensions of the clearances constituting the first electricity storage element-row side intake guide passage 193a, the second electricity storage element-row side intake guide passage 193b, the intake-side flow passage 190, the outlet-side flow passage 191, the first electricity storage element-row side outlet guide passage 194a and the second electricity storage element-row side outlet guide passage 194b (the distances between the pertinent parts as defined in the description of the first embodiment) are set substantially equal to each other. Through these measures, the cooling medium 1 can be distributed even more uniformly through the clearances present between the individual lithium ion electricity storage elements 140 in the first electricity storage element row 121 and the second electricity storage element row 122.

Other structural features are identical to those of the fifth embodiment. For this reason, the same reference numerals are assigned to components identical to those of the fifth embodiment so as to preclude the necessity for a repeated explanation thereof.

Through the embodiment described above, a better cooling effect over the fifth embodiment is assured and thus, a lithium ion battery device 1000 with more advanced performance over that achieved in the fifth embodiment can be provided.

### Embodiment 7

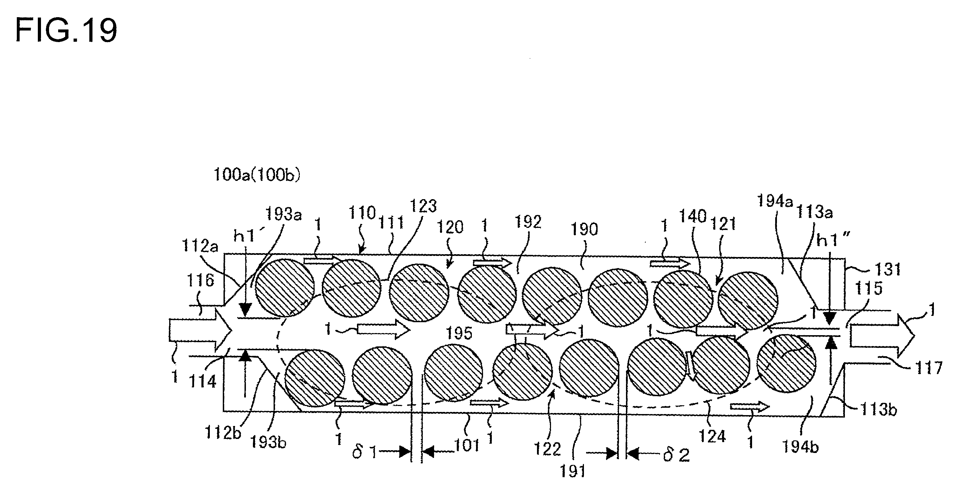

The seventh embodiment of the present invention is described in reference to FIG. 19. In the embodiment, achieved by revising the fifth embodiment, h1' representing the dimension of the clearance measured along the height-wise direction at the end of the central flow passage 195, which is closest to the cooling medium intake port 114, i.e., the smallest distance between the lithium ion electricity storage elements 140 in the first electricity storage element row 121 and the lithium ion electricity storage element 140 in the second electricity storage element row 122 located closest to the cooling medium intake port 114, is set greater than h1 (the dimension of the clearance forming the central flow passage 195, measured along the height-wise direction (the smallest distance between the lithium ion electricity storage elements 140 in the two electricity storage element rows) having been defined in the description of the fifth embodiment, and h1" (< h1') representing the dimension of the clearance measured along the height-wise direction at the end of the central flow passage 195, which is located closest to the cooling medium outlet port 115, i.e., the smallest distance between the lithium ion electricity storage elements 140 in the first electricity storage element row 121 and the lithium ion electricity storage element 140 in the second electricity storage element row 122, which are disposed closest to the cooling medium outlet port 115, is set smaller than h1. Through these measures, the flow of the cooling medium 1 traveling through the central flow passage 195 can be slowed down on the upstream side and speeded up on the downstream side. As a result, the heat transfer (heat exchange) between the lithium ion electricity storage elements 140 in the first battery assembly group 123 and the cooling medium 1 is further deterred and the heat transfer (heat exchange) between the lithium ion electricity storage elements 140 in the second battery assembly group 124 and the cooling medium 1 is further promoted.

Other structural features are identical to those of the fifth embodiment. For this reason, the same reference numerals are assigned to components identical to those of the fifth embodiment so as to preclude the necessity for a repeated explanation thereof.

In the embodiment described above, the temperature differences among the lithium ion electricity storage elements 140, manifested by the lithium ion electricity storage elements 140 located on the upstream side in the flow path of the cooling medium 1 and the lithium ion electricity storage elements 140 present on the downstream side in the flow path of the cooling medium 1, can be reduced over the fifth embodiment. As a result, a further improvement in the cooling performance over the fifth embodiment is achieved and a lithium ion battery device 1000 assuring more advanced performance over the first embodiment is provided through the embodiment.

### Embodiment 8

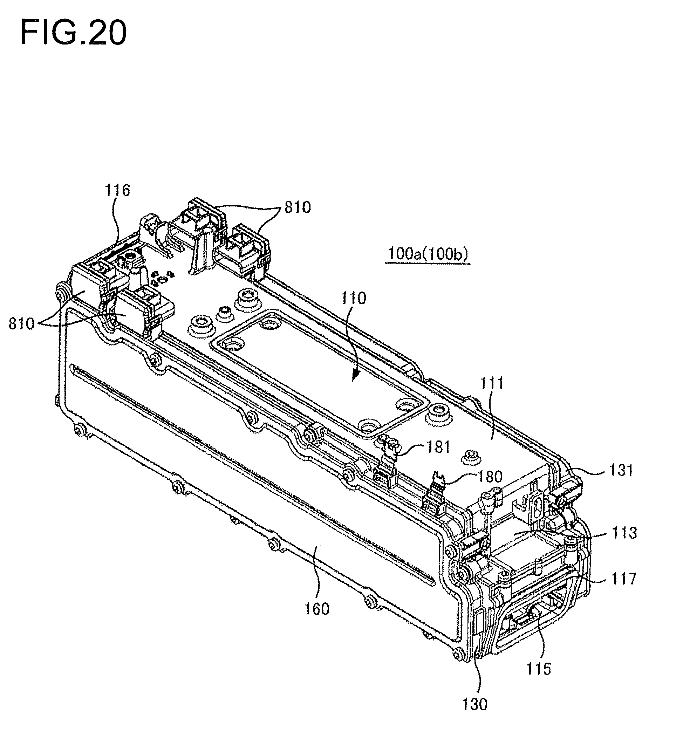

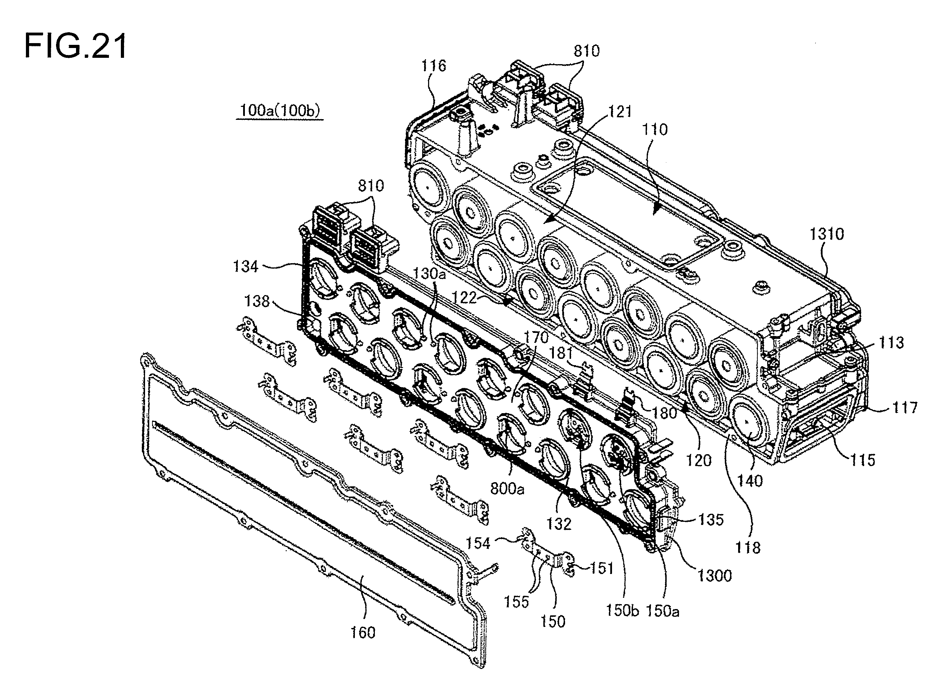

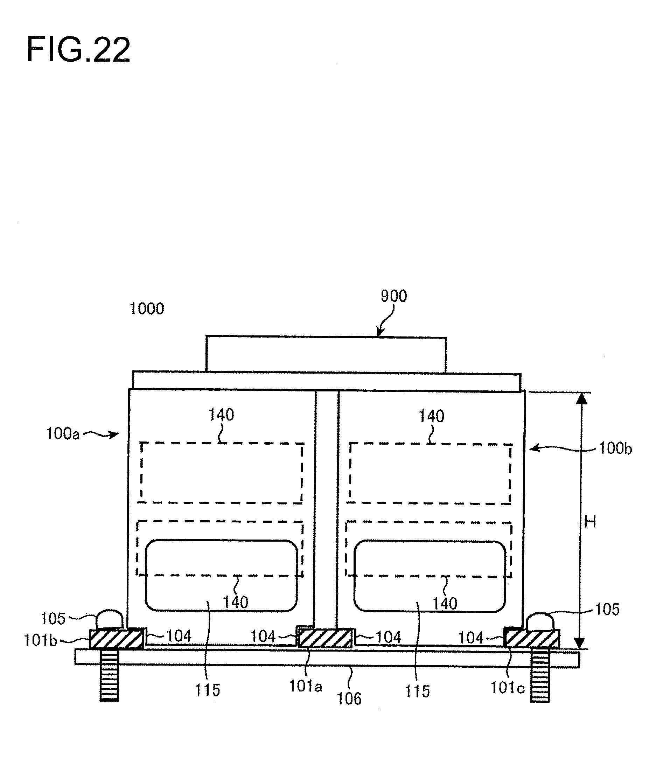

In reference to FIGS. 20 through 22, the eighth embodiment of the present invention is described.

The eighth embodiment is a variation of the first embodiment.

The following description of the embodiment focuses on structural elements that differentiate the current embodiment from the first embodiment. Any other structural elements should be assumed to be identical to those in the first embodiment. Accordingly, the same reference numerals are assigned to structural elements identical to those of the first embodiment so as to preclude the necessity for a repeated explanation thereof.

The structure adopted for the side plates 130 and 131 in the embodiment is different from that of the first embodiment (the cooling chamber (storage chamber) formed further toward the lithium ion electricity storage elements 140 between the side plates 130 and 131 and the gas release chambers 170 formed on the two opposite sides are identical to those of the first embodiment).

In the first embodiment, the conductive members 150 are embedded in the side plates 130 and 131 as integrated parts of the side plates 130 and 131. In addition, the connection lines 800, laid out to run over the surfaces of the side plates 130 and 131 on their sides toward the lithium ion electricity storage elements 140, are provided as elements independent of the side plates 130 and 131 in the first embodiment.

The relationship assumed among these elements in the embodiment is the reverse of that in the first embodiment. Namely, the conductive members 150 in the embodiment are structural elements independent of the side plates 130 and 131 (except for a conductive member 150a formed as an integrated part of a positive pole-side terminal 180 and a conductive member 150b formed as an integrated part of a negative pole-side terminal 181). The conductive members 150a and 150b are embedded in the side plates 130 and 131 and are thus integrated with the side plates 130 and 131. In addition, connection lines (not shown) are embedded in the side plates 130 and 131, thereby integrating the connection lines with the side plates 130 and 131 in the embodiment. The connection lines are constituted with narrow rectangular metal wires constituted of, for instance, copper.

A front end portion 800a of each connection line is exposed over part of the corresponding through hole 132. The front end portion 800a is connected through welding by disposing a conductive member 150 at the side plate 130 or 131 so as to engage two projections 130a at the side plate 130 or 131 in two through holes 155 formed at the center of the conductive member 150 bent so as to project at the center and thus placing the side plate in contact with a welding area 154 at an end of the conductive member 150.

The side of the connection line opposite from the front end portion 800a, formed by using the same material as that used to form the side plates 130 and 131, is formed as an integrated part of the side plate 130 or 131 and extends to a connector terminal 810 disposed at the upper end along the height-wise direction located on one side of the side plate 130 or 131 along the lengthwise direction. The connector terminal 810 includes a fuse (not shown) and electrically connects a wiring extending from the voltage detection connector at the controller (not shown) with the side of the connection line opposite from the front end portion 800a via the fuse.

In addition, liquid gaskets are used as seal members sealing any clearance between the lithium ion electricity storage elements 140 and the side plates 130 and 131 in the embodiment.

Furthermore, a separate outlet flow passage forming plate 118, independent of the module base 101, is used in the embodiment. The module base 101 is split into three separate parts along the crosswise direction. Namely, a central base 101a disposed at a center, located over the boundary of the high potential-side battery block 100a and the low potential-side battery block 100b set side-by-side, an end base 101b disposed at an end of the high potential-side battery block 100a (the end located on the side opposite from the low potential-side battery block 100b) and an end base 101c disposed at an end of the low potential-side battery block 100b (the end located on the side opposite from the high potential-side battery block 100a) constitute the module base.

At the lower ends of each battery block, i.e., the high potential-side battery block 100a or the low potential-side battery block 100b, located on the two sides facing opposite each other along the crosswise direction, notched recesses 104 ranging continuously along the lengthwise direction achieve a key-shaped section.

At the recess 104 at the lower end of the high potential-side battery block 100a, located on the side opposite from the low potential-side battery block 100b, a crosswise end of the end base 101b, which is elongated along the lengthwise direction, is housed. At the recessed 104 at the lower end of the low potential-side battery block 100b, located on the side opposite from the high potential-side battery block 100a, a crosswise end of the end base 101c, which is elongated along the lengthwise direction, is housed. At the bottom center where the boundary between the high potential-side battery block 100a and the low potential-side battery block 100b is present, the central base 101a, elongated along the lengthwise direction, is fitted inside the recesses formed at the lower ends of the high potential-side battery block 100a and the low potential-side battery block 100b located on the sides set next to each other.

As described above, the high potential-side battery block 100a and the low potential-side battery block 100b in the embodiment include recesses 104 and the central base 101a, the end base 101b and the end base 101c constituting the three-part module base 101 in the embodiment are attached to the high potential-side battery block 100a and the low potential-side battery block 100b by fitting them in the recesses 104. As a result, the height H of the high potential-side battery block 100a and the low potential-side battery block 100b can be reduced while assuring efficient dimensions for the clearances, measured along the height-wise direction, which form cooling medium flow passages inside the casing 110. By adopting the embodiment structured as described above, a compact lithium ion battery device 100 that still assures superior cooling performance can be provided.

In addition, the module base 101 in the embodiment adopting a three-part structure constituted with the central base 101a and the end bases 101b and 101c requires a smaller quantity of metal material over that required to form the module base in the first embodiment, thereby contributing to reducing the weight of the lithium ion battery device 1000.

Parts of the end bases 101b and 101c, which range out along the crosswise direction from the lower ends of the high potential-side battery block 100a and the low potential-side battery block 100b are locked via bolts 105 onto a flat mounting base 106 of the body or of a power supply case mounted on the body. As a result, the lithium ion battery device 1000 itself is locked to the body or the power supply case disposed on the body.

The high potential-side battery block 100a (low potential-side battery block 100b) is assembled by first attaching, via a liquid gasket, either the side plate 130 or the side plate 131 to the lithium ion electricity storage elements 140 and then by attaching the other side plate 134 131 to the lithium ion electricity storage elements 140 via a liquid gaskets. Next, conductive members 150 are mounted at either the side plate 130 or the side plate 131 and the conductive members thus mounted are then welded to the terminal surfaces of the individual lithium ion electricity storage elements 140. In the following step, conductive members 150 are mounted at the other side plate 131 or 130 and the conductive members thus mounted are welded to the terminal surfaces of the individual lithium ion electricity storage elements 140. Steps substantially identical to step 4 and subsequent steps in FIG. 1 should then be followed to complete the assembly process.

Through the embodiment described above, too, advantages similar to those of the first embodiment are achieved.

While the embodiment has been described above as a variation of the first embodiment, the structure unique to the current embodiment may be adopted as a variation of any of the second through seventh embodiments.
While the invention has been particularly shown and described with respect to preferred embodiments thereof by referring to the attached drawings, the present invention is not limited to these examples and it will be understood by those skilled in the art that various changes in form and detail may be made therein without departing from the spirit, scope and teaching of the invention.
The disclosure of the following priority application is herein incorporated by reference: Japanese Patent Application No. 2009-108655, filed April 28, 2009.

## Claims

1. An electricity storage module, comprising:
a casing that includes an intake port through which a cooling medium is taken in, located at one end of the casing, and an outlet port through which the cooling medium is let out, located at another end of the casing; and
a plurality of electricity storage elements housed inside the casing, wherein:
the electricity storage elements are arrayed from the intake port toward the outlet port with clearances set between the electricity storage elements; and
the clearances present between the electricity storage elements are altered so as to achieve a higher flow velocity for the cooling medium on the outlet port side compared to the flow velocity of the cooling medium on the intake port side.

2. An electricity storage module, according to claim 1, wherein:
the clearances between the electricity storage elements become smaller on a cooling medium downstream side than on a cooling medium upstream side.

3. An electricity storage module according to claim 1, wherein:
the clearances between the electricity storage elements are set differently for at least two electricity storage element groups including a first electricity storage element group made up with electricity storage elements disposed on a cooling medium upstream side among the plurality of electricity storage elements and a second electricity storage element group made up with electricity storage elements disposed on a cooling medium downstream side among the plurality of electricity storage elements, so that the clearances between the electricity storage elements in the second electricity storage element group are smaller than the clearances between the electricity storage elements in the first electricity storage element group.

4. An electricity storage module, comprising:
a casing that includes an intake port through which a cooling medium is taken in, located at one end of the casing, and an outlet port through which the cooling medium is let out, located at another end of the casing; and
a plurality of electricity storage elements housed inside the casing, wherein:
the plurality of electricity storage elements are an assembled array of electricity storage elements that include a first electricity storage element row made up with a plurality of electricity storage elements disposed with clearances therebetween by ensuring that central axes of the electricity storage elements extend parallel to one another and are set side-by-side from the intake port side toward the outlet port side with clearances set between the electricity storage elements and a second electricity storage element row made up with a plurality of electricity storage elements disposed with clearances therebetween by ensuring that central axes of the electricity storage elements extend parallel to one another and are set side-by-side from the intake port side toward the outlet port side, with the first electricity storage element row and the second electricity storage element row stacked with a clearance present therebetween so that the first electricity storage element row is offset toward the intake port side relative to the second electricity storage element row and that the second electricity storage element row is offset toward the outlet port side relative to the first electricity storage element row; and
the clearances present between the electricity storage elements along a direction in which the cooling medium flows are altered so as to achieve a higher flow velocity for the cooling medium on the outlet port side compared to the flow velocity on the intake port side.

5. An electricity storage module according to claim 4, wherein:
the plurality of electricity storage elements are divided into at least two electricity storage element groups including a first electricity storage element group made up with electricity storage elements disposed on a cooling medium upstream side and a second electricity storage element group made up with electricity storage elements disposed on a cooling medium downstream side, and the clearances between the electricity storage elements are set differently from one group to another along the direction in which the cooling medium flows.

6. An electricity storage module according to claim 5, wherein:
the clearances between the electricity storage elements along the direction in which the cooling medium flows are altered so that the clearances between the electricity storage elements in the second electricity storage element group are smaller than the clearances between the electricity storage elements in the first electricity storage element group along the direction in which the cooling medium flows.

7. An electricity storage module according to claim 4, further comprising:
a member for regulating a flow of cooling medium, disposed on the intake port side.

8. An electricity storage module according to claim 4, further comprising:
an adiabatic plate disposed at an electricity storage element located closest to the intake port side at a position facing opposite the intake port.

9. An electricity storage module according to claim 4, further comprising:
a third electricity storage element row made up with the electricity storage elements disposed with clearances set therebetween by ensuring that central axes of the electricity storage elements extend parallel to each other and are set side-by-side from the intake port side toward the outlet port side, wherein:
the third electricity storage element row is stacked with a clearance over a stacked assembly made up with the first electricity storage element row and the second electricity storage element row, with the third electricity storage element row offset toward the intake port side or the outlet port side relative to the stacked assembly.

10. An electricity storage module according to claim 4, wherein:
the first electricity storage element row and the second electricity storage element row are separated by a clearance greater than the clearance between the electricity storage elements along the direction in which the cooling medium flows.

11. An electricity storage module according to claim 10, wherein:
the clearance between the first electricity storage element row and the second electricity storage element row is greater on a cooling medium downstream side than on a cooling medium upstream side.

12. An electricity storage module according to claim 4, wherein:
at least two electricity storage blocks are arranged parallel to each other, with each electricity storage block configured by holding the plurality of electricity storage elements in the casing.

13. An electricity storage module according to claim 12, further comprising:
a base for locking the electricity storage blocks to another member, wherein:
recesses are formed at bottoms of the electricity storage blocks; and
the base, which is fitted in the recesses and is thus attached to the electricity storage blocks, is also locked to the other member with locking device.

14. An electricity storage module, comprising:
a casing that includes a first plate member elongated along a cooling medium flow direction in which a cooling medium flows and a second plate member disposed at a position facing opposite the first plate member;
a first electricity storage element row made up with a plurality of electricity storage elements disposed along the first plate member;
a second electricity storage element row made up with a plurality of electricity storage elements disposed along the second plate member;
an intake port through which the cooling medium is drawn into the casing;
an outlet port through which the cooling medium in the casing is discharged;
an intake-side guide plate disposed at the casing on the intake port side; and
an outlet-side guide plate disposed at the casing on the outlet port side, wherein:
the first electricity storage element row and the second electricity storage element row are disposed between the first plate member and the second plate member;
the second electricity storage element row is disposed further toward the second plate member relative to the first electricity storage element row with an offset toward the outlet port side relative to the first electricity storage element row;
at one end of the casing along the cooling medium flow direction, the intake port is disposed at a position further toward the first plate member rather than toward the second electricity storage element row, the intake-side guide plate covers at least an area ranging from the intake port side of the second electricity storage element row to the second plate member, and a cooling medium flow to travel along the first plate member and a cooling medium flow to travel along the intake guide plate are formed with the cooling medium drawn into the casing through the intake port;
at another end of the casing along the cooling medium flow direction, the outlet port is disposed at a position further toward the second plate member rather than toward the first electricity storage element row and the outlet-side guide plate covers at least an area ranging from the outlet side of the first electricity storage element row to the first plate member; and
clearances separating the electricity storage elements in the first electricity storage element row and the electricity storage elements in the second electricity storage element row along the cooling medium flow direction are altered so as to achieve a higher flow velocity for the cooling medium on the outlet port side than on the intake port side.

15. An electricity storage module according to claim 14, wherein:
the electricity storage elements in the first electricity storage element row and the second electricity storage element row are divided into at least two electricity storage element groups including a first group disposed on a cooling medium upstream side and a second group disposed on a cooling medium downstream side, and the clearances between the electricity storage elements in the first electricity storage element row and the second electricity storage element row are set differently from one group to another along the cooling medium flow direction.

16. An electricity storage module according to claim 15, wherein:
the clearances between the electricity storage elements in the first electricity storage element row and the second electricity storage element row along the cooling medium flow direction are altered so that the clearances between the electricity storage elements in the second group are smaller than the clearances between the electricity storage elements in the first group along the cooling medium flow direction.

17. An electricity storage device, comprising:
an electricity storage module that includes a plurality of electricity storage elements electrically connected with one another; and
a battery managing device that manages states of electricity storage elements and transmits information indicating the states to a higher order control device, wherein:
the electricity storage module is an electricity storage module according to any one of claim 1, claim 4 and claim 14.
